# EUROPEAN PATENT SPECIFICATION

(11) **EP 3 913 522 B1**
(45) Date of publication and mention of the grant of the patent: **01.03.2023**
(21) Application number: 20769351.6
(22) Date of filing: 06.03.2020
(51) Int. Cl.: G06K 7/10, G06Q 20/20, G06Q 20/34

(54) **METHOD FOR AUTOMATICALLY SELECTING NFC EMULATION CARD, ELECTRONIC APPARATUS, AND COMMUNICATIONS SYSTEM**
VERFAHREN ZUR AUTOMATISCHEN AUSWAHL EINER NFC-EMULATIONSKARTE, ELEKTRONISCHE VORRICHTUNG UND KOMMUNIKATIONSSYSTEM
PROCÉDÉ DE SÉLECTION AUTOMATIQUE DE CARTE D'ÉMULATION NFC, APPAREIL ÉLECTRONIQUE ET SYSTÈME DE COMMUNICATION

(30) Priority: 11.03.2019 CN 201910180005
(43) Date of publication of application: 24.11.2021
(73) Proprietor: Huawei Technologies Co., Ltd., Shenzhen, Guangdong 518129 (CN)
(72) Inventor: ZHOU, Yun, Shenzhen, Guangdong 518129 (CN); WANG, Yongwei, Shenzhen, Guangdong 518129 (CN); LI, Xiang, Shenzhen, Guangdong 518129 (CN); WANG, Hongjian, Shenzhen, Guangdong 518129 (CN)
(74) Representative: Pfenning, Meinig & Partner mbB
(86) International application number: PCT/CN2020/078105
(87) International publication number: WO 2020/182064

(56) References cited:
- WO-A1-2017/128182
- CN-A- 103 491 589
- CN-A- 106 204 026
- CN-A- 106 462 842
- CN-A- 106 465 112
- CN-A- 110 020 569
- US-A1- 2016 086 159
- US-A1- 2016 086 168

## Description

### TECHNICAL FIELD

This application relates to the field of near field communication, and in particular, to a method, an electronic device, and a communications system for automatically selecting an NFC emulation card.

### BACKGROUND

Near field communication (near field communication, NFC) is a short-range high-frequency radio technology, runs at an operating frequency of 13.56 MHz in a range of 10 cm, and has three transmission speeds of 106 Kbit/s, 212 Kbit/s, or 424 Kbit/s. Currently, the NFC technology has become a related international standard, and is widely used.

Generally, an NFC electronic device (for example, a mobile phone having an NFC function) may have three operating modes, namely, a card reader mode, a point-to-point mode, and a card emulation mode. In the card reader mode, the NFC electronic device may be used as a contactless card reader, for example, to read related information from an NFC tag of a poster or exhibition. In this mode, the NFC electronic device may collect data from the NFC tag and then process the data. Typical scenarios based on this mode include reading an electronic advertisement, selling a ticket, selling a cinema ticket, and the like. For example, if an NFC tag is affixed to a movie poster, a user may put the NFC electronic device close to the movie poster, so as to obtain detailed information about the movie. In addition, the NFC electronic device in the card reader mode may be further used for simple data acquisition, for example, obtaining information such as bus station information or a park map. In the point-to-point mode, two NFC electronic devices may establish a wireless connection to implement point-to-point data exchange. Based on this mode, a plurality of tablet computers and mobile phones that have an NFC function can be wirelessly interconnected to implement data exchange. Typical application scenarios based on this mode include quickly establishing a Bluetooth connection, exchanging contacts, and the like. In the card emulation mode, the NFC electronic device may be simulated as an NFC card for use, that is, the NFC electronic device may simulate a contactless radio frequency card that meets an NFC-related standard, so as to exchange data with an NFC card reader. This mode is mainly used in contactless scenarios such as consumption, transportation, and access control. For example, the user can put the mobile phone close to an NFC card reader and enter a password to confirm a transaction or directly receive a transaction. This makes it possible to use the NFC electronic device for contactless NFC services without changing existing facilities.

In the card emulation mode, the NFC electronic device may use an emulation card by default, for example, a bank card. However, when the user takes a bus, after the mobile phone is close to an NFC card reader on the bus, a payment cannot be completed because what is used by default is the bank card. In this case, the user needs to manually select a bus card on the mobile phone, and then put the mobile phone close to the NFC card reader again to complete the payment. It can be learned that operation steps performed on the NFC electronic device in this scenario are very cumbersome. This greatly reduces a capability of intelligent interaction between the mobile device and the user, and also reduces NFC usage efficiency of the NFC electronic device. US2016086168 A1 is reflected in the preamble portion of claim 1.

### SUMMARY

The invention is set out in the independent claims.

An objective of this application is to provide a method, an electronic device, and a communications system for automatically selecting an NFC emulation card, so that NFC usage efficiency of the electronic device can be greatly improved, and a process in which a user shares data by using the electronic device is simpler and more effective.

The foregoing objective and another objective may be achieved by using features in independent claims. Further implementations are reflected in the dependent claims, the specification, and the accompanying drawings.

According to a first aspect, a communications system for automatically selecting an NFC emulation card is provided. The communications system includes an NFC card reader and an electronic device having an NFC function. The NFC card reader is configured to send third query information after detecting an NFC radio frequency field of the electronic device. The third query information carries first identification information and service type information of an emulation card supported by the NFC card reader.

The electronic device is configured to: after receiving the third query information, determine whether a first emulation card corresponding to the first identification information exists; when determining that the first emulation card exists, determine whether a second emulation card corresponding to the service type information exists; and send fourth response information when determining that the second emulation card exists. The fourth response information carries second identification information of the second emulation card. The NFC card reader is further configured to send card selection instruction information after receiving the fourth response information. The card selection instruction information carries the second identification information. The electronic device is further configured to send card selection response information after receiving the card selection instruction information.

According to the foregoing technical solution, when the electronic device, for example, a mobile phone, is close to the NFC card reader to perform an NFC payment, the mobile phone may automatically select a corresponding emulation card. This avoids a technical issue in the current technology that an NFC payment fails when a service type of a default emulation card is inconsistent with a service type of the emulation card supported by the NFC card reader. In addition, in the foregoing technical solution, cumbersome operations of displaying a user interface on the electronic device and then manually switching an emulation card by the user do not need to be performed, thereby improving NFC communication efficiency and improving user experience. In addition, in the foregoing embodiment, an interaction process between the electronic device and the NFC card reader may not require any operation of the user, and does not need to be presented to the user through the user interface. Therefore, an imperceptible payment can be implemented.

In a possible implementation, the first identification information is an application identifier AID, the third query information is carried on an application protocol data unit APDU sending command, and the fourth response information is carried on an APDU response command.

In another possible implementation, the service type information is carried on an instruction parameter P1 in the APDU sending command.

In another possible implementation, service type information of the first emulation card is different from service type information of the second emulation card.

In another possible implementation, the electronic device is further configured to present prompt information. The prompt information is used to prompt the user that an NFC transaction succeeds or fails. In this way, the user can directly sense whether a current NFC payment is successful, so that the user can perform further reactions or operations.

According to a second aspect, an NFC-based data transmission method is provided. The method is applied to an NFC card reader and an electronic device having an NFC function, and the method may include: The NFC card reader detects an NFC radio frequency field of the electronic device. The NFC card reader sends third query information in response to the foregoing detection. The third query information includes first identification information and service type information of an emulation card supported by the NFC card reader. After receiving the third query information, the electronic device (for example, a mobile phone having an NFC function) determines whether a first emulation card corresponding to the first identification information exists. When determining that the first emulation card exists, the electronic device determines whether a second emulation card corresponding to the service type information exists. The electronic device sends fourth response information when determining that the second emulation card exists. The fourth response information carries second identification information of the second emulation card. The NFC card reader sends card selection instruction information after receiving the fourth response information. The card selection instruction information carries the second identification information. The electronic device sends card selection response information after receiving the card selection instruction information.

In a possible implementation, the first identification information is an application identifier AID, the third query information is carried on an application protocol data unit APDU sending command, the fourth response information is carried on an APDU response command, and the service type information is carried on an instruction parameter P1 in the APDU sending command.

In another possible implementation, the sending, by the electronic device, fourth response information when determining that the second emulation card exists may specifically include: The electronic device collects biometric feature information of a user. The electronic device attempts to verify the collected biometric feature information. The electronic device sends the fourth response information when the verification succeeds. This further improves security of an NFC payment.

According to a third aspect, an electronic device is provided, including one or more touchscreens, one or more processors, and one or more memories. The one or more memories store one or more computer programs, the one or more computer programs include instructions, and when the instructions are executed by the one or more processors, the electronic device is enabled to perform the following steps: receive third query information, where the third query information includes first identification information and service type information of an emulation card supported by an NFC card reader; determine whether a first emulation card corresponding to the first identification information exists; when determining that the first emulation card exists, determine whether a second emulation card corresponding to the service type information exists; send fourth response information when determining that the second emulation card exists, where the fourth response information carries second identification information of the second emulation card; receive card selection instruction information sent by the NFC card reader, where the card selection instruction information carries the second identification information; and send card selection response information.

According to a fourth aspect, an NFC apparatus is provided, applied to an NFC card reader. The NFC apparatus includes at least one processor and one memory, and the memory is coupled to the processor. The memory is configured to store first identification information of a first emulation card and service type information supported by the NFC card reader. The at least one processor is configured to indicate the NFC card reader to send the first identification information and the service type information to an electronic device. The at least one processor is further configured to indicate, based on received fourth response information sent by the electronic device, the NFC card reader to send card selection instruction information. The card selection instruction information carries second identification information, and the second identification information is carried in the fourth response information by the electronic device.

In a possible implementation, the NFC apparatus is an NFC chip.

In another possible implementation, the NFC apparatus may not include the memory. Therefore, the one or more processors may be coupled to the memory in the NFC card reader, and perform the same functions described above.

According to a fifth aspect, an NFC card reader is provided. The NFC card reader may include one or more processors, a memory, an NFC transceiver, and one or more computer programs. The one or more computer programs are stored in the memory, and the one or more computer programs include instructions. When the instructions are executed by the one or more processors, the NFC card reader is enabled to perform the following steps:
send third query information, where the third query information carries first identification information and service type information of an emulation card supported by the NFC card reader;
receive fourth response information sent by an electronic device, where the fourth response information carries second identification information, and the second identification information is consistent with the service type information; and
send card selection instruction information, where the card selection instruction information carries the second identification information.

In a possible implementation, the first identification information is an application identifier AID, the third query information is carried on an application protocol data unit APDU sending command, and the fourth response information is carried on an APDU response command.

In another possible implementation, the service type information is carried on an instruction parameter P1 in the APDU sending command.

According to a sixth aspect, an NFC-based data transmission electronic device (for example, a mobile phone) is further provided. The electronic device has a function of implementing behaviors of the electronic device in the foregoing method embodiments. The function may be implemented by hardware, or may be implemented by hardware executing corresponding software. The hardware or the software may include one or more modules corresponding to the foregoing function.

According to a seventh aspect, a computer-readable storage medium is further provided. The computer-readable storage medium stores instructions, and when the instructions are run on a computer (for example, a mobile phone, or a tablet computer), the computer is enabled to perform the methods according to the foregoing aspects.

It should be understood that descriptions of technical features, technical solutions, beneficial effects, or similar words in this application do not imply that all features and advantages can be implemented in any individual embodiment. On the contrary, it may be understood that descriptions of the features or the beneficial effects mean that one or more embodiments include a specific technical feature, technical solution, or beneficial effect. Therefore, the descriptions of the technical features, the technical solutions, or the beneficial effects in this specification may not necessarily belong to one same embodiment. Further, the technical features, the technical solutions, and the beneficial effects described in the embodiments may be combined in any appropriate manner. A person skilled in the art understands that an embodiment may be implemented without one or more specific technical features, technical solutions, or beneficial effects in a specific embodiment. In other embodiments, additional technical features and beneficial effects may be further identified in a specific embodiment that does not reflect all the embodiments.

### BRIEF DESCRIPTION OF DRAWINGS

FIG. 1A is a schematic diagram of a communications system 100 according to some embodiments;
FIG. 1B is a schematic diagram of performing NFC communication between an electronic device 101 and an NFC card reader 102;
FIG. 2 is a schematic structural diagram of an electronic device 101 according to some embodiments;
FIG. 3 is a schematic diagram of a software architecture of an electronic device 101 according to some embodiments;
FIG. 4A is a schematic structural diagram of an NFC communications module 400 in an electronic device 101 according to some embodiments;
FIG. 4B is a schematic structural diagram of an NFC communications module 400 in an electronic device 101 according to some other embodiments;
FIG. 4C is a schematic structural diagram of an NFC communications module 400 in an electronic device 101 according to some other embodiments;
FIG. 5 is a schematic diagram of information exchange between an electronic device 101 and an electronic device 103 according to some other embodiments;
FIG. 6 is a schematic diagram of a signaling flow direction between an NFC card reader 102 and an electronic device 101 according to some embodiments;
FIG. 7 is a schematic structural diagram of an NFC card reader 102 according to some embodiments;
FIG. 8 is a schematic flowchart of an NFC-based data transmission method according to some embodiments;
FIG. 9 is a schematic structural diagram of an APDU sending command;
FIG. 10 is a schematic structural diagram of an APDU response command;
FIG. 11A to FIG. 11E are schematic diagrams of a series of graphical user interfaces displayed on an electronic device 101 according to some embodiments; and
FIG. 12 is a schematic flowchart of an NFC-based data transmission method according to some other embodiments.

### DESCRIPTION OF EMBODIMENTS

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" or "one or more" means one, two, or more. The term "and/or" is used to describe an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiments. Therefore, in this specification, statements, such as "in an embodiment", "in some embodiments", "in some other embodiments", and "in other embodiments", that appear at different places do not necessarily mean referring to a same embodiment, instead, the statements mean referring to "one or more but not all of the embodiments", unless otherwise specifically emphasized in other ways. The terms "include", "comprise", "have", and variants of the terms all mean "include but are not limited to", unless otherwise specifically emphasized in other ways.

The following describes an electronic device having an NFC function, a user interface for such an electronic device, and embodiments for using such an electronic device. In some embodiments, the electronic device may be a portable electronic device that further includes other functions such as a personal digital assistant function and/or a music player function, for example, a mobile phone, a tablet computer, or a wearable electronic device having a wireless communication function (for example, a smartwatch). An example embodiment of the portable electronic device includes but is not limited to a portable electronic device using iOS^{®}, Android^{®}, Microsoft^{®}, or another operating system. The portable electronic device may alternatively be another portable electronic device, for example, a laptop (Laptop). It should be further understood that, in some other embodiments, the foregoing electronic device may not be a portable electronic device but a desktop computer.

It may be understood that, for ease of description, unless otherwise specified in the following embodiments, the electronic device refers to an electronic device having an NFC function, or such an electronic device may be referred to as an NFC electronic device. The following describes in detail the embodiments of this application with reference to accompanying drawings.

An embodiment of this application provides a communications system. The communications system may include one or more electronic devices and a card reader, and proximity-based (proximity-based) contactless transaction or communication may be implemented between the one or more electronic devices and the card reader. The one or more electronic devices may be configured to manage near field communication with the card reader.

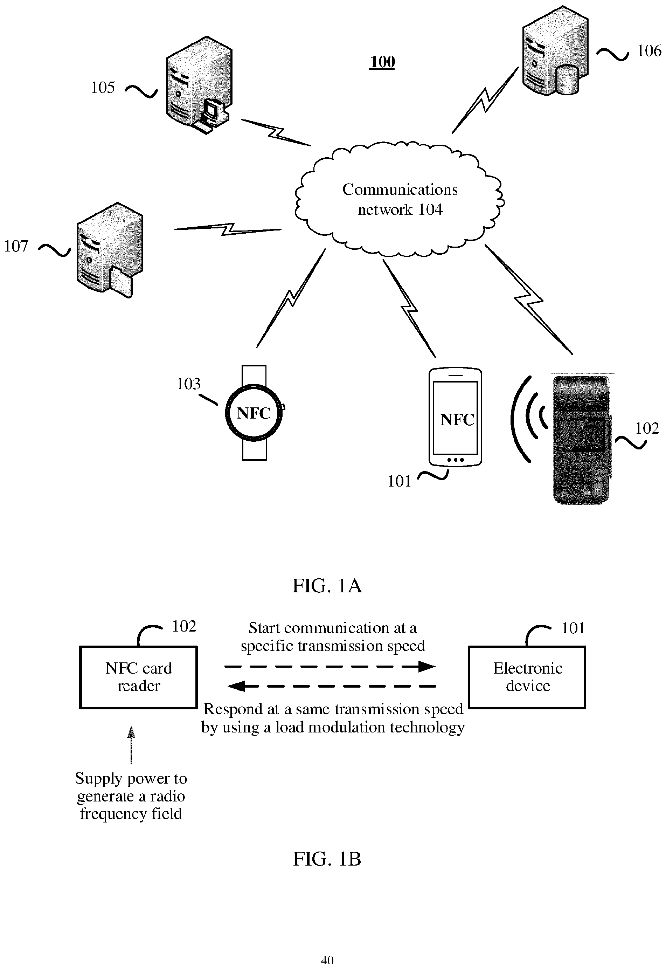

For example, as shown in FIG. 1A, a communications system 100 is provided. The communications system 100 may include an electronic device 101 and an NFC card reader 102. The electronic device 101 may include an NFC communications module (the component is described in detail in the following embodiments). The NFC communications module 400 may be any appropriate proximity-based communication mechanism (communication mechanism), and may implement proximity-based contactless communication between the electronic device 101 and the NFC card reader 102. The NFC communications module may allow short-range communication at a relatively low data rate (for example, 42.4 kbps), and may comply with any appropriate standard, such as IS0/IEC 7816, IS0/IEC 18092, ECMA-340, IS0/IEC 21481, ECMA-352, IS0 14443 and/or ISO 15693. Alternatively or in addition, the NFC communications module may also allow short-range communication at a relatively high data rate (for example, 560 Mbps), and may comply with any appropriate standard such as the Transfer Jet^{™} protocol. The NFC communications module may communicate with the NFC card reader 102 within any appropriate short-range distance between the electronic device 101 and the NFC card reader 102, for example, in a range of about 2 cm to 4 cm, and may operate at any appropriate frequency (for example, 13.56 MHz). For example, such short-range communication of the NFC communications module may occur through magnetic field induction, so that the NFC communications module may communicate with another electronic device and/or obtain information from a tag having radio frequency identification ("RFID") circuit. The NFC communications module may further provide a manner of collecting merchant information, transmitting payment information, and communicating with the NFC card reader 102 in another manner.

As shown in FIG. 1B, an NFC radio frequency field (RF field) is usually emitted by an NFC card reader, and one of 106 Kbit/s, 212 Kbit/s, and 424 Kbit/s may be selected as a transmission speed for communication with a mobile device. An NFC apparatus 202 of the mobile device may sense the radio frequency field emitted by the NFC card reader. Specifically, an NFC antenna (or a coil) of a mobile device 600 (for example, a mobile phone 300, or a smartwatch 200) is load of a transmit antenna (or a coil) of the NFC card reader. In this way, the mobile device changes parameters (such as resonance and detuning) of an antenna loop, to modulate the NFC card reader, so that the mobile device can transmit data back to the NFC card reader at a same speed. This implements data transmission from the mobile device to the NFC card reader by using weak energy. A data backhaul capability is achieved by using a load modulation technology, so that power consumption of the mobile device can be greatly reduced and a battery life can be prolonged. The foregoing data format may be an NFC data exchange format (NFC Data Exchange Format, NDEF).

In some embodiments, the communications system 100 may further include an application server 105. The application server 105 is configured to communicate, by using one or more communications networks 104, with an application (application, APP) installed on the electronic device 101 (for example, a mobile phone), to manage one or more NFC emulation cards, other data, and the like that are set in the application. For example, the application server 105 may be a Huawei Pay server, and the application server 105 may be configured to manage various types of NFC emulation cards in an application "Huawei Pay". For example, a user may add or delete a bank card, an access card, a fitness card, or a bus card in the application, store a value on a bus card, or modify financial information of a bank card. The foregoing operations performed by the user on the "Huawei Pay" may be synchronized with the application server 105 through the communications network 104, so that the application server 105 manages the application "Huawei Pay". In some other embodiments, the user may access data stored in the application server 105 in another manner, and further configure the NFC emulation card, for example, enter a web address of the application server 105 in a browser to access the data, and perform the foregoing operations.

In some other embodiments, the communications system 100 may further include a verification server 106. The verification server 106 is configured to provide payment verification of an NFC transaction, and send a verification result to the NFC card reader 102 through the communications network 104. The NFC card reader 102 may send a payment success or payment failure message to the electronic device 102 based on the verification result. In some other embodiments, after verification, the verification server 106 may also send the payment success or payment failure message to the electronic device 101 through the communications network 104, and then the electronic device prompts the user in an appropriate manner (for example, displaying the message on a display, or vibrating or ringing). In this way, the electronic device 101 (for example, a mobile phone) may learn of a payment result of the NFC transaction in time through, for example, a mobile cellular network, so that the user of the electronic device 101 performs subsequent different processing. For example, after receiving a payment failure message, the mobile phone may prompt the user of the message, and the user may first hold the mobile phone away from the NFC card reader 102, and then approach the NFC card reader 102 again to try to make another NFC payment. For another example, after receiving the payment failure message, the electronic device 101 may first prompt the user on the display. The user opens the application "Huawei Pay", selects an emulation card from the application, and then approaches the NFC card reader 102 again to try to make another NFC payment.

In some other embodiments, the communications system 100 may further include a registration server 107. The registration server 107 is configured to manage application registration information submitted by a registered application provider (registered application provider). The registration server 107 stores a registered application provider identifier (registered application provider identifier, RID), and a corresponding registered AID. The RID may be a part of the AID, and is used to uniquely identify an application provider. For a specific registration process of the RID, refer to the standard in ISO/IEC 7816-5:2004. Details are not described in this embodiment of this application.

In some other embodiments, the system 100 may further include an electronic device 103 (for example, a wearable device). For example, the electronic device 101 may be connected (for example, in a wired or wireless manner) to the electronic device 103 through the communications network 104. The communications network 104 may be a local area network (local area networks, LAN), or may be a wide area network (wide area networks, WAN), for example, an internet. The communications network 104 may be implemented by using any known network communications protocol. The foregoing network communications protocol may be various wired or wireless communications protocols, such as Ethernet, a universal serial bus (universal serial bus, USB), a firewire (FIREWIRE), a global system for mobile communications (global system for mobile communications, GSM), general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), Bluetooth, wireless fidelity (wireless fidelity, Wi-Fi), an NFC, a voice over internet protocol (voice over Internet protocol, VoIP), a communications protocol that supports a network slicing architecture, or any other suitable communications protocol. For example, in some embodiments, the electronic device 101 may establish a Bluetooth connection to the electronic device 103 by using a Bluetooth protocol.

In some embodiments, proximity-based contactless communication may be implemented between the electronic device 103 and the NFC card reader 102. In some other embodiments, the electronic device 103 may establish a connection to the electronic device 101 through the communications network 104 (for example, Bluetooth^{®}). In this case, the electronic device 103 may perform proximity-based contactless communication (for example, an NFC transaction) with the NFC card reader 102 under authorization of the electronic device 101, and may send a transaction result or communication information to the electronic device 101 through the communications network 104. The transaction result or the communication information is displayed on the electronic device 101.

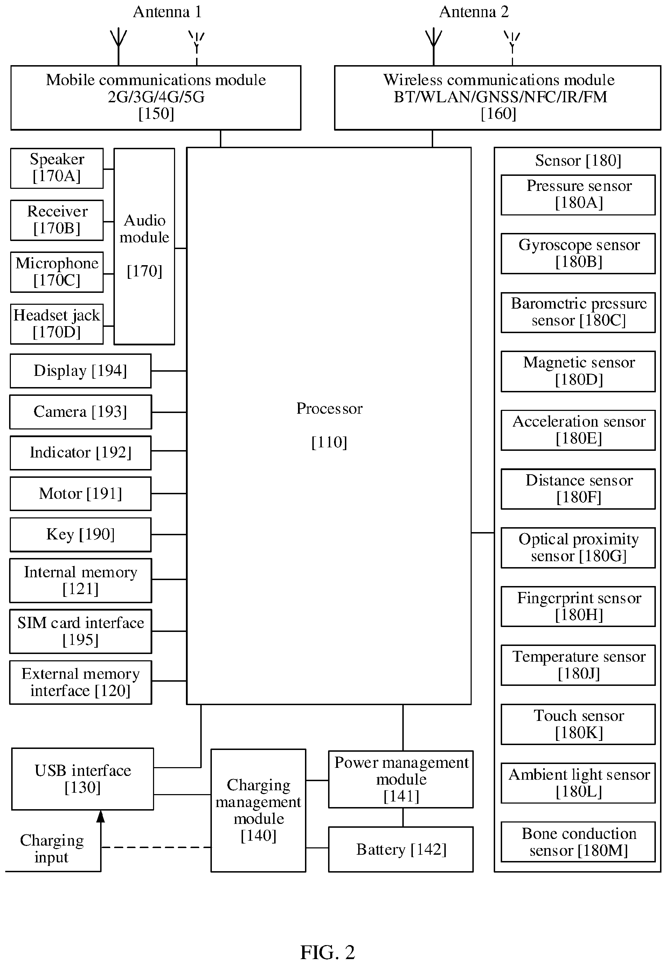

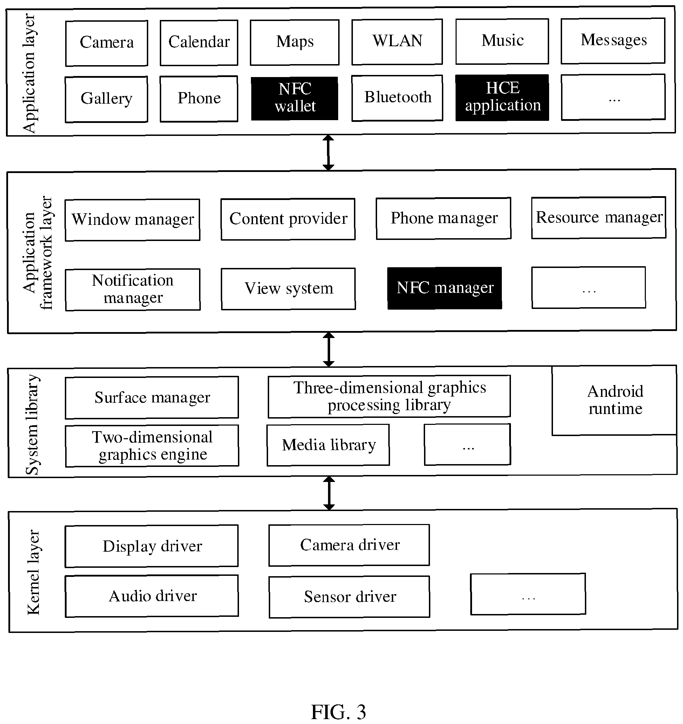

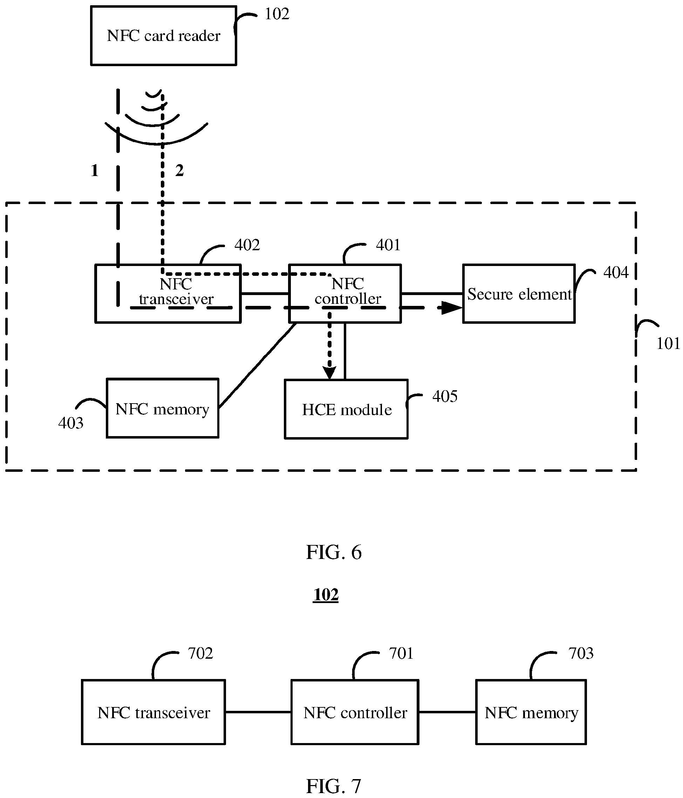

It may be understood that, in some embodiments, the electronic device 101 may perform a single function (for example, dedicated to managing near field communication). However, in some other embodiments, the electronic device 101 may perform a plurality of functions (for example, managing near field communication, playing music, and answering and/or making calls). For example, a specific structure of the electronic device 101 is described in detail with reference to FIG. 2 and FIG. 3 in subsequent embodiments. A specific structure of the NFC card reader 102 is described in detail with reference to FIG. 6 in a subsequent embodiment.

For example, the electronic device 101 shown in FIG. 1 may be a mobile phone, a tablet computer, or the like. The NFC card reader 102 may be, for example, an NFC card reader configured on a bus or an NFC payment terminal configured in a store. The electronic device 103 may be a wearable device such as a smartwatch.

For example, FIG. 2 is a schematic structural diagram of the electronic device 101 (for example, a mobile phone) in FIG. 1. As shown in FIG. 2, the electronic device 101 may include a processor 110, an external memory interface 120, an internal memory 121, a USB interface 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset interface 170D, one or more sensors 180, a key 190, a motor 191, an indicator 192, a camera 193, a display 194, a subscriber identification module (subscriber identification module, SIM) card interface 195, and the like. It may be understood that a structure shown in this embodiment does not constitute a specific limitation on the electronic device 101. In some other embodiments, the electronic device 101 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors. In some embodiments, the electronic device 101 may alternatively include one or more processors 110. The controller may generate an operation control signal based on instruction operation code and a time sequence signal, to complete control of instruction reading and instruction execution. In some other embodiments, a memory may be further disposed in the processor 110, to store instructions and data. For example, the memory in the processor 110 may be a cache memory. The memory may store instructions or data just used or cyclically used by the processor 110. If the processor 110 needs to use the instructions or the data again, the processor 110 may directly invoke the instructions or the data from the memory. In this way, repeated access is avoided, a waiting time of the processor 110 is reduced, and efficiency of processing data or executing instructions by the electronic device 101 is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM card interface, a USB interface, and/or the like. The USB interface 130 is an interface that conforms to a USB standard specification, and may be specifically a mini USB interface, a micro USB interface, a USB Type-C interface, or the like. The USB interface 130 may be configured to connect to a charger to charge the electronic device 101, or may be configured to transmit data between the electronic device 101 and a peripheral device. The USB interface 130 may alternatively be configured to connect to a headset, and play audio by using the headset.

It may be understood that an interface connection relationship between components shown in this embodiment is merely an example for description, and does not constitute a limitation on a structure of the electronic device 101. In some other embodiments, the electronic device 101 may alternatively use an interface connection manner different from that in the foregoing embodiment, or a combination of a plurality of interface connection manners.

A wireless communication function of the electronic device 101 may be implemented by the antenna 1, the antenna 2, the mobile communications module 150, the wireless communications module 160, the modem processor, the baseband processor, and the like. The antenna 1 and the antenna 2 are configured to transmit and receive electromagnetic wave signals. Each antenna in the electronic device 101 may be configured to cover a single communications frequency band or a plurality of communications frequency bands. Different antennas may be further multiplexed to improve antenna utilization. For example, the antenna 1 may be multiplexed as a diversity antenna in a wireless local area network. In some other embodiments, the antenna may be used in combination with a tuning switch.

The mobile communications module 150 can provide a solution, applied to the electronic device 101, to wireless communication including 2G, 3G, 4G, 5G, and the like. The mobile communications module 150 may include one or more filters, a switch, a power amplifier, a low noise amplifier, and the like. The mobile communications module 150 may receive an electromagnetic wave through the antenna 1, perform processing such as filtering or amplification on the received electromagnetic wave, and transmit a processed electromagnetic wave to the modem processor for demodulation. The mobile communications module 150 may further amplify a signal modulated by the modem processor, and convert an amplified signal into an electromagnetic wave through the antenna 1 for radiation. In some embodiments, at least some function modules in the mobile communications module 150 may be disposed in the processor 110. In some embodiments, at least some function modules in the mobile communications module 150 may be disposed in the same device as at least some modules of the processor 110.

The wireless communications module 160 can provide a solution, applied to the electronic device 101, to wireless communication including a wireless local area network (wireless LAN, WLAN), Bluetooth, a global navigation satellite system (global navigation satellite system, GNSS), frequency modulation (frequency modulation, FM), NFC, an infrared (infrared, IR) technology, and the like. The wireless communications module 160 may be one or more components integrating one or more communications processor modules. The wireless communications module 160 receives an electromagnetic wave through the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert a processed signal into an electromagnetic wave through the antenna 2 for radiation.

In some embodiments, the antenna 1 of the electronic device 101 and the mobile communications module 150 are coupled, and the antenna 2 and the wireless communications module 160 are coupled, so that the electronic device 101 can communicate with a network and another electronic device by using a wireless communications technology. The wireless communications technology may include GSM, GPRS, CDMA, WCDMA, TD-SCDMA, LTE, GNSS, WLAN, NFC, FM, an IR technology, and/or the like. The GNSS may include a global positioning system (global positioning system, GPS), a global navigation satellite system (global navigation satellite system, GLONASS), a beidou navigation satellite system (beidou navigation satellite system, BDS), a quasi-zenith satellite system (quasi-zenith satellite system, QZSS), and/or a satellite based augmentation system (satellite based augmentation systems, SBAS).

The electronic device 101 may implement a display function by using the GPU, the display 194, the AP, and the like. The GPU is a microprocessor for image processing, and is connected to the display 194 and the AP. The GPU is configured to perform mathematical and geometric calculation, and render an image. The processor 110 may include one or more GPUs that execute instructions to generate or change display information. The electronic device 101 may implement a photographing function by using the ISP, one or more cameras 193, the video codec, the GPU, one or more displays 194, the AP, and the like.

The external memory interface 120 may be configured to connect to an external storage card, for example, a micro SD card, to extend a storage capability of the electronic device 101. The external storage card communicates with the processor 110 through the external memory interface 120, to implement a data storage function. For example, data files such as music, a photo, and a video are stored in the external storage card.

The internal memory 121 may be configured to store one or more computer programs, and the one or more computer programs include instructions. The processor 110 may run the instructions stored in the internal memory 121, so that the electronic device 101 performs the NFC-based data transmission method, various applications, data processing, and the like that are provided in some embodiments of this application. The internal memory 121 may include a program storage area and a data storage area. The program storage area may store an operating system. The program storage area may further store one or more applications (for example, Gallery and Contacts), and the like. The data storage area may store data (for example, a photo and a contact) created during use of the electronic device 101, and the like. In addition, the internal memory 121 may include a high-speed random access memory, or may include a nonvolatile memory, for example, one or more magnetic disk storage devices, a flash memory device, or a universal flash storage (universal flash storage, UFS). In some embodiments, the processor 110 may run the instructions stored in the internal memory 121 and/or the instructions stored in the memory that is disposed in the processor 110, to enable the electronic device 101 to perform the NFC-based data transmission method, other applications, and data processing that are provided in the embodiments of this application.

The electronic device 101 may implement an audio function such as music playing and recording through the audio module 170, the speaker 170A, the receiver 170B, the microphone 170C, the headset jack 170D, the AP, and the like.

The sensor 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like. The touch sensor 180K may also be referred to as a touch panel or a touch-sensitive surface. The touch sensor 180K may be disposed on the display 194, and the touch sensor 180K and the display 194 form a touchscreen. The touch sensor 180K is configured to detect a touch operation on or near the touch sensor 180K. The touch sensor may transfer the detected touch operation to the AP, to determine a type of a touch event. A visual output related to the touch operation may be provided through the display 194. In some other embodiments, the touch sensor 180K may alternatively be disposed on a surface of the electronic device 101 at a location different from that of the display 194.

The SIM card interface 195 is configured to connect to a SIM card. The SIM card may be inserted into the SIM card interface 195 or detached from the SIM card interface 195, to implement contact with or separation from the electronic device 101. The electronic device 101 may support one or more SIM card interfaces. The SIM card interface 195 may support a nano-SIM card, a micro-SIM card, a SIM card, and the like. A plurality of cards may be simultaneously inserted into a same SIM card interface 195. The plurality of cards may be of a same type or of different types. The SIM card interface 195 may be compatible with different types of SIM cards. The SIM card interface 195 may also be compatible with an external storage card. The electronic device 101 interacts with a network by using the SIM card, to implement a call function, a data communication function, and the like. In some embodiments, the electronic device 101 uses an eSIM, namely, an embedded SIM card. The eSIM card may be embedded in the electronic device 101 and cannot be separated from the electronic device 101.

In some embodiments, the wireless communications module 160 may be specifically configured to establish a short-range wireless communications link with the NFC card reader 102, so that the wireless communications module 160 and the NFC card reader 102 perform short-range wireless data transmission with each other. For example, the short-range wireless communications link may be a Bluetooth link, a Wi-Fi link, an NFC link, or the like. Therefore, the wireless communications module 160 may specifically include a Bluetooth communications module, a Wi-Fi communications module, or an NFC communications module. The NFC communications module may include any appropriate component configured to implement proximity-based contactless communication between the electronic device 101 and the NFC card reader 102, so as to provide an NFC function for the electronic device 101.

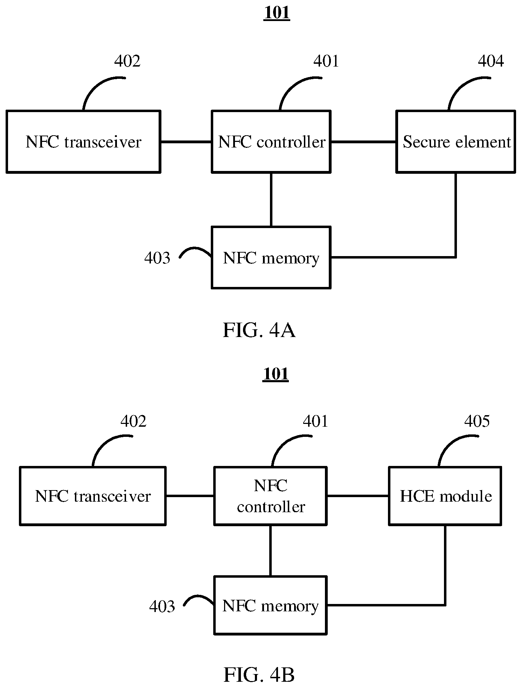

For example, as shown in FIG. 4A, an NFC communications module 400 may include an NFC controller 401, an NFC transceiver 402, an NFC memory 403, and a secure element (secure element, SE) 404.

The NFC controller 401 is connected to the processor 110. The NFC controller 401 is further separately connected to the NFC transceiver 402 and the NFC memory 403, and is mainly configured to modulate and demodulate a contactless communications signal, control input and output of data in the NFC memory 403, and interact with the processor 110. In some other embodiments, the NFC controller 401 may alternatively be an NFC chip that implements the foregoing functions.

The NFC transceiver 402 is connected to the NFC controller 401, and is configured to send and receive a 13.56 MHz radio frequency signal. The NFC transceiver 402 may include an electromagnetic compatibility (electromagnetic compatibility, EMC) filter circuit, a matching circuit, a receiving circuit, an NFC antenna, and the like. The NFC antenna may be a loop antenna, and is configured to implement a proximity-based contactless communication capability of the NFC communications module 400. In some other embodiments, the NFC antenna may alternatively be the antenna 2 in FIG. 3.

The NFC memory 403 may be configured to store information about various emulation cards, or may store data sent by the NFC communications module 400 to the NFC card reader 102, and data received from the NFC card reader 102. In some embodiments, the NFC memory 403 may be one memory, and the memory may be shared by the foregoing components in the NFC communications module 400. For example, some data in the memory 403 may be invoked by the NFC controller 401, and other data may be invoked by the SE 404. In some other embodiments, the NFC memory 403 may alternatively be a set of a plurality of memories. For example, the NFC controller 401 may include a first memory. The first memory may store an instruction or data that is just used or cyclically used by the NFC controller 401. If the NFC controller 401 needs to use the instruction or data again, the NFC controller 401 may directly invoke the instruction or data from the first memory. In this way, a waiting time of the NFC controller 401 is reduced. For another example, the SE 404 may include a second memory. The second memory stores secure element-based NFC emulation card information, and the like. In this way, if the SE 404 needs to read the emulation card information, the SE 404 may directly invoke the emulation card information from the second memory. Therefore, in this embodiment, the NFC memory 403 includes the first memory and the second memory.

In some embodiments, the NFC memory 403 may further store routing information. In some embodiments, the routing information may be controlled or managed by the NFC controller 401. The routing information may include a routing table, and the routing table includes a list of routing rules (a list of routing rules). Each routing rule includes one piece of application identification information (for example, an application identifier (application identifier, AID)) and one destination (destination). The destination may be the processor 110 of the electronic device 101 (a place where an NFC-related APP runs) and may be the SE 404 connected to the NFC controller 401. In some other embodiments, the routing information may further include an identifier of the secure element, a status of the secure element, and the like.

An NFC wired interface (NFC-wired interface, NFC-WI) is an example connection manner between the SE 404 and the NFC controller 401, and is used for communication between the SE 404 and the NFC controller 401. In some embodiments, the SE 404 is connected to the NFC controller 401 through the NFC-WI interface. A main function of the SE 404 is secure storage of applications and data, and providing a secure computing service externally. The SE 404 may further communicate with another electronic device through the NFC controller 401, to implement security of data storage and communication processes. It may be understood that the SE 404 may be a tamper-resistant component in the electronic device 101 configured to provide security, confidentiality, and support various application environments. In addition, the SE 404 may also include one or more applications executed in the environment of the SE 404 (such as in an operating system of the SE 404/or in a Java runtime environment running on the SE 404). The one or more applications may include one or more applications (such as Huawei Pay^{®}, Alipay^{®}, PayPal^{®}, and the like) for NFC payment stored in the internal memory 121. The SE 404 further supports security isolation of data of applications. That is, for security, the SE 404 may not allow access between different applications. The SE 404 further provides symmetric and asymmetric encryption algorithms and certificate capabilities required by various mobile payment services, provides a program interface for secure transaction application access, and supports bidirectional communication with the NFC controller 401 or the processor 110. In some embodiments, the SE 404 may include the second memory and one or more microprocessors. The second memory may store the one or more applications used for NFC payment, so that the SE 404 can easily read the applications, thereby improving NFC payment efficiency.

The SE 404 may exist in a plurality of forms. For example, the SE 404 may be integrated in a universal integrated circuit card (universal integrated circuit card, UICC). For example, the SE 404 may be integrated into a SIM card, manufactured and sold by a telecommunications operator, thereby reducing costs for electronic device manufacturers. Alternatively, the SE 404 may be integrated into a printed circuit board (printed circuit board, PBC) of the electronic device 101, or may be integrated into a secure digital (secure digital, SD) storage card. When the SE 404 is integrated into the PBC of the electronic device 101, the SE 404 may be independent of other software and hardware of the electronic device 101, and support an encryption protocol to enhance access control. Only an authenticated application can access the SE 404 and initiate an NFC service such as an NFC payment. Therefore, security of the NFC service is ensured. In some other embodiments, the electronic device 101 may include one or more secure elements, and the secure elements may run independently of each other.

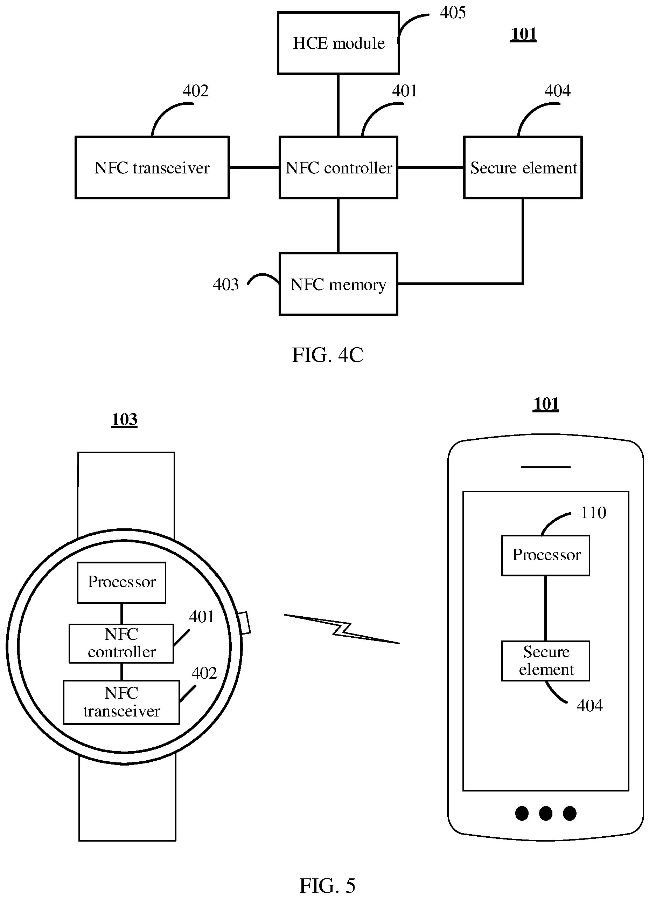

In some other embodiments, as shown in FIG. 5, the SE 404 may be disposed in the electronic device 101, and the NFC controller 401 and the NFC transceiver 402 may be disposed in the electronic device 103 (for example, a smartwatch 103). The electronic device 103 establishes a wireless connection (for example, a Bluetooth connection) to the electronic device 101 through the communications network 104, so as to implement information exchange between the two electronic devices. Because the SE 404 is disposed in the electronic device 101, the electronic device 101 may be used as a primary device to control an NFC service, for example, an NFC payment, performed by using the electronic device 103, and a control manner may specifically include authentication, authorization, or the like. For example, when the electronic device 103 approaches the NFC card reader 102, the NFC card reader 102 sends card selection instruction information to the electronic device 103. After receiving the card selection instruction information, the electronic device 103 sends the card selection instruction information to the electronic device 101 through the communications network 104. The SE 404 in the electronic device 101 may determine, based on the card selection instruction information, emulation card information used for this NFC transaction, for example, an emulation card corresponding to the card selection instruction information is a bank card. The electronic device 101 sends the determined emulation card information to the electronic device 103 through the communications network 104. After receiving the information, the electronic device 103 sends card selection response information to the NFC card reader 102 through the NFC transceiver 402. After receiving the card selection response information, the NFC card reader 102 performs the NFC payment by using the emulation card information carried in the information. In some embodiments, when a distance between the electronic device 101 and the electronic device 103 becomes larger and larger, and finally the distance is so large that the wireless connection (for example, the Bluetooth connection) is interrupted, in this case, whether the NFC payment is performed by using the electronic device 101 or the NFC payment is performed by using the electronic device 103, the NFC payment cannot be successfully performed. This ensures security of the NFC transaction. In some other embodiments, the SE 404 may alternatively be disposed in the electronic device 103 (for example, a smartwatch), and the NFC controller 401 and the NFC transceiver 402 are disposed in the electronic device 103 (for example, a mobile phone). It may be understood that the technical solution in which a secure element is configured on the electronic device 101 to implement an NFC-related service or function in the foregoing embodiment may be referred to as a hardware-based virtual card solution.

In some other embodiments, the SE 404 may not be configured for the NFC communications module 400, and an application running in the electronic device 101 or a server on a network side (for example, the application server 105 in FIG. 1) provides the related functions provided by the SE 404. That is, the electronic device 101 may simulate, by using the foregoing application or the foregoing server service, the NFC-related function provided by the SE 404. In this embodiment, data received by the NFC communications module 400 can be sent to the foregoing server through the foregoing application related to the NFC service in the electronic device 101 or through the communications network 104, to complete NFC communication, thereby implementing the NFC-related service. This implementation solution frees from a hardware limitation that the electronic device 101 needs to configure the SE 404 to smoothly perform the NFC service. This solution is referred to as a host-based card emulation (host-based card emulation, HCE) solution. It should be noted that "virtual card solution" and "HCE solution" are merely two terms used in this embodiment of this application, meanings represented by the terms have been described in this embodiment of this application, and names thereof shall not constitute any limitation on this embodiment of this application. It may be understood that, in some other embodiments of this application, the foregoing terms may also use another name.

As shown in FIG. 4B, in the foregoing HCE solution, the NFC communications module 400 may include the NFC controller 401, the NFC transceiver 402, the NFC memory 403, and an HCE module 405.

In some other embodiments, the NFC communications module 400 is configured with the SE 404, and the electronic device 101 also has the HCE solution. (For example, the internal memory 121 stores one or more applications, and the one or more applications are configured to provide an NFC function provided by the secure element.) That is, the electronic device 101 supports the foregoing virtual card solution and also supports the HCE solution. In this case, the electronic device 101 may automatically determine, based on different scenarios, which NFC technical solution to use. In other words, the electronic device 101 may automatically determine different NFC emulation cards based on different card selection instruction information sent by the NFC card reader 102. The NFC emulation card may be an emulation card stored in the NFC communications module 400, or may be an emulation card stored in the HCE module 405.

For example, as shown in FIG. 4C, the NFC communications module 400 includes the NFC controller 401, the NFC transceiver 402, the NFC memory 403, the SE 404, and the HCE module 405.

For example, as shown in FIG. 6, when the NFC card reader 102 sends the card selection instruction information according to an NFC-related protocol, a signaling flow direction may follow a path represented by a dashed line 1 or a dashed line 2 in FIG. 6. After the NFC transceiver 402 receives the card selection instruction, the NFC controller 401 parses out application identification information (for example, AID) carried in the card selection instruction information, and then combines the routing table stored in the NFC memory 403, to determine whether the parsed application identification information matches the application identification information in the routing table. If the parsed application identification information matches the application identification information in the routing table, the card selection instruction information is forwarded to a destination associated with the application identification information. For example, if the parsed application identification information matches first application identification information in the routing table, the card selection instruction information may be forwarded by the NFC controller 401 to the SE 404 associated with the first application identification information, so that the SE 404 determines the NFC emulation card based on the card selection instruction information, as the signaling flow direction shown by the dashed line 1 in FIG. 6. For another example, if the parsed application identification information matches second application identification information in the routing table, the card selection instruction information may be forwarded by the NFC controller 401 to the processor 110 associated with the second application identification information, so that the processor 110 determines the NFC emulation card based on the card selection instruction information, as the signaling flow direction shown by the dashed line 2 in FIG. 6.

In some other embodiments, the routing table may include a default routing rule. When determining that the parsed application identification information does not match the application identification information in the routing table, the NFC controller 401 may forward the card selection instruction information to a specified destination according to the default routing rule. In some other embodiments, if determining that the parsed application identification information does not match the application identification information in the routing table, the NFC controller 401 may discard the card selection instruction information.

For example, in the foregoing scenario, an NFC-related native application is installed in the electronic device 101. In addition, a user may also download and install a third-party application on the electronic device 101 through an application store. Generally, the native application may use the virtual card solution, and the third-party application may use the HCE solution. The native application may be, for example, Huawei Pay^{®}, Samsung Pay^{®}, or UnionPay^{®}, and the third-party application may be, for example, Alipay^{®} or PayPal^{®}.

Although the NFC communications module 400 has been described with reference to near field communication, it should be understood that the NFC communications module 400 may be configured to provide any suitable proximity-based contactless mobile payment or any other suitable type of proximity-based contactless communication between the electronic device 101 and the NFC card reader 102. For example, the NFC communications module 400 may be configured to provide any suitable short-range communication, such as those short-range communications involving electromagnetic coupling technology/electrostatic coupling technology.

For example, FIG. 3 is a schematic diagram of a software architecture of the electronic device 101 according to some embodiments. In a layered architecture, software is divided into several layers, and each layer has a clear role and task. The layers communicate with each other through a software interface. In some embodiments, a software structure may be divided into four layers. As shown in FIG. 3, there is respectively an application layer, an application framework layer, an Android runtime (Android runtime) and system library, and a kernel layer from top to bottom.

The application layer includes one or more applications. As shown in FIG. 3, the application may include Camera, Map, Phone, NFC wallet, HCE application, and the like. The NFC wallet may be a native application installed on the electronic device 101 (for example, a mobile phone) before the electronic device 101 is delivered from the factory. The NFC wallet implements an NFC-related function by using a secure element-based virtual card solution. For example, the NFC wallet may be Huawei Pay^{®}, Samsung Pay^{®}, or UnionPay^{®}. In addition, the NFC wallet may be managed based on a service provider of the application, for example, updating the application or adding a bank card. The HCE application is an NFC-related application that is downloaded and installed on the electronic device 101 through the application store. The HCE application implements the NFC-related function by using a software-based HCE solution. For example, the HCE application may be Alipay, or PayPal. In some other embodiments, the HCE application may also be installed on the electronic device 101 before the electronic device 101 is delivered from the factory, so that a user can use the HCE application through simple settings after purchasing the electronic device 101, without going to the application store to download and install the HCE application. This eliminates cumbersome operations and improves user experience.

The application framework layer may include a window manager, a resource manager, a notification manager, an NFC manager (NfcManger), and the like. The NFC manager (NfcManger) may be configured to manage all NFC adapters indicated in the electronic device 101. For example, a function NfcAdapter may be used to represent the NFC communications module 400 of the electronic device 101. The Nfc Adapter is an entry for an application to access an NFC function, and is mainly to obtain an instance of the NFC adapter. A getDefaultAapater( ) function may be used to obtain an adapter supported by a system. In addition, the NFC manager is further configured to process data from related NFC applications such as the NFC wallet and the HCE application. Alternatively, the NFC manager forwards, based on the routing information, data received from the NFC card reader 102 to the NFC wallet, or the HCE application.

For example, FIG. 7 is a schematic structural diagram of the NFC card reader 102 according to some embodiments. The NFC card reader 102 is configured to detect, read, or receive, in another manner, NFC communication from the electronic device 101 (for example, when the electronic device 101 enters a specific distance or adjacent area of the NFC card reader 102). The NFC card reader 102 may include an NFC controller 701, an NFC transceiver 702, and an NFC memory 703. The NFC controller 701 is connected to the NFC transceiver 702, and is mainly configured to modulate and demodulate a contactless communications signal, and control input and output of data in the NFC memory 703.

The NFC transceiver 702 is connected to the NFC controller 701, and is configured to send and receive a 13.56 MHz radio frequency signal. The NFC transceiver 702 may include an EMC filter circuit, a matching circuit, a receiving circuit, an NFC antenna, and the like. The NFC antenna may be a loop antenna, and is configured to implement a proximity-based contactless communication capability of the NFC card reader 102.

The NFC memory 703 may be configured to store information about various types of emulation cards, a card selection instruction, and the like, or may store data sent by the NFC card reader 102 to the electronic device 101, or may be configured to store data received from the electronic device 101.

It may be understood that the following embodiments may be implemented in the communications system 100 including the electronic device 101 and the NFC card reader 102.

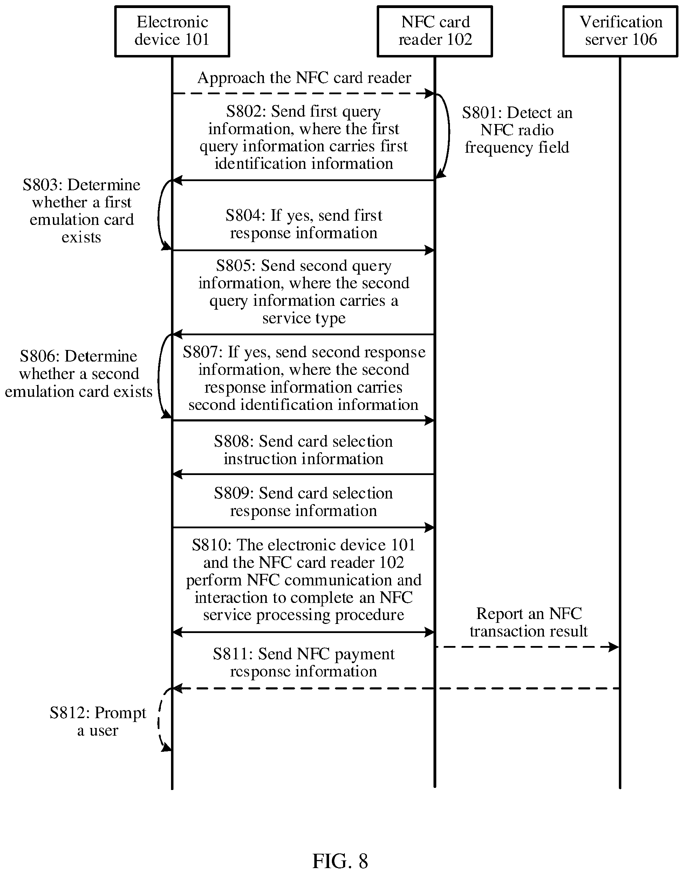

As shown in FIG. 8, this embodiment provides an NFC-based data transmission method. The method may be implemented in the foregoing communications system 100, and the method may include the following steps.

Step S801: The NFC card reader 102 detects an NFC radio frequency field of the electronic device 101.

Step S802: In response to the detected NFC radio frequency field, the NFC card reader 102 sends first query information, where the first query information carries first identification information.

In a practical scenario, for example, when a user takes a bus, the user picks up a mobile phone with an NFC function and approaches an NFC card reader disposed on the bus. In this case, the NFC card reader may detect an NFC radio frequency field of the mobile phone. After the NFC radio frequency field is detected, to avoid an NFC payment failure, the NFC card reader may first send the first query information to the mobile phone, so as to determine whether the mobile phone supports an emulation card query service. That is, the first query information is used to determine whether the electronic device 101 supports the emulation card query service.

For example, the first query information may include identification information of a first emulation card (that is, the first identification information). The first emulation card is configured to determine whether the electronic device 101 supports an emulation card query service. That is, the first emulation card is not an emulation card used for an NFC transaction (for example, a bus card, a bank card, or an access card), but an emulation card used to verify whether the electronic device 101 supports the emulation card query service. Therefore, a type of the first emulation card is different from that of the emulation card described above for the NFC transaction, and the first emulation card may also be referred to as an intermediary card. It may be understood that the "intermediary card" is merely a term used in this embodiment of this application, and a meaning represented by the "intermediary card" has been described in this embodiment of this application, and a name thereof shall not constitute any limitation on this embodiment of this application. In addition, in some other embodiments of this application, the "intermediary card" may also be referred to as another name, for example, "query card" or "media card".

In some embodiments, the first query information may be carried on an application protocol data unit (application protocol data unit, APDU) sending command. For example, there are two types of APDU commands: one is the APDU sending command, and the other is an APDU response command. Generally, after sending an APDU sending command, the NFC card reader immediately receives an APDU response command sent by a peer end (for example, the electronic device 101). This communication mode may be referred to as a command-response pair (command-response pair). The APDU sending command is generally sent by the NFC card reader 102, and the APDU response command is generally sent by the peer end, for example, an NFC mobile phone.

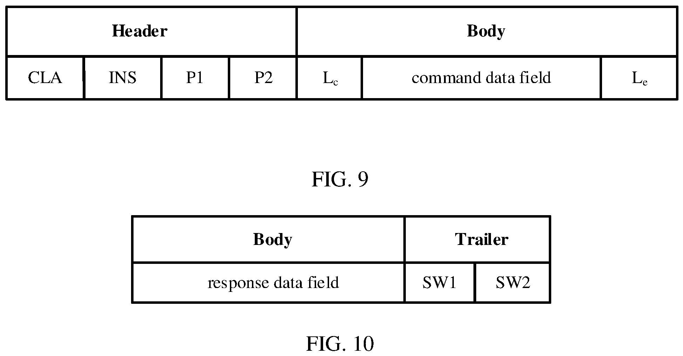

For example, FIG. 9 is a schematic structural diagram of the APDU sending command. The APDU sending command includes a header (header) and a body (body). The header includes four fields: class (class, CLA), instruction (instruction, INS), instruction parameter 1 (P1), and instruction parameter 2 (P2). The CLA field is mainly used to indicate a type of a command, for example, an inter-industry command or a proprietary command. The INS field is used to indicate a to-be-executed command, and the command is a specific instruction in an instruction class identified in the CLA field, for example, an instruction for obtaining a file, creating a file, or obtaining data. The P1 field and the P2 field indicate an instruction parameter of the APDU sending command, for example, indicate a file offset address, so that data is written at the offset address. The body of the APDU sending command may include an L_{c} field, a command data field (command data field), and an Lₑ field. The L_{c} field indicates a quantity of bytes (Nc) of data field carried in the APDU sending command. The data field includes data whose length is N_{c} bytes. The Lₑ field indicates a maximum quantity of bytes (Nₑ) of expected response data. A person skilled in the art may understand that a specific structure and definition of the APDU command are described in detail in an NFC-related standard, and details are not described herein again.

For example, the first query information may be sent by the NFC transceiver 702 in the NFC card reader 102 to the NFC transceiver 402 of the electronic device 101 through an NFC link. The first query information carries an AID of the first emulation card. In some embodiments, the first query information may be the APDU sending command. For example, the APDU sending command may be "00A4040007D2760000850100", and may be shown in Table 1.

**Table 1**

| CLA | INS | P1 | P2 | L_{c} | command data field | Lₑ |
|---|---|---|---|---|---|---|
| 00 | A4 | 04 | 00 | 07 | D2760000850100 | |

"D2760000850100" in the command data field is the first identification information of the first emulation card, that is, the AID of the first emulation card is D2760000850100, and the AID may be registered. The Lₑ field is left empty, indicating that the maximum quantity of bytes of the response data is not limited.

Step S803: The electronic device 101 determines, after receiving the first query information, whether a corresponding first emulation card exists.

For example, after the NFC transceiver 402 of the electronic device 101 receives the first query information, the NFC controller 401 parses the first query information to obtain the first identification information. Then, the NFC controller 401 determines, based on routing information (for example, the routing table) stored in the NFC memory 403, whether the first identification information matches identification information stored in the routing information. If the first identification information matches the identification information stored in the routing information, the NFC controller 401 sends the first identification information to a destination corresponding to the first identification information, for example, the HCE module 405 or the SE 404. For example, if the matched first identification information is managed by the HCE module 405, the NFC controller 401 routes the first query information to the HCE module 405. After receiving the first query information forwarded by the NFC controller 401, the HCE module 405 may query the NFC memory 403 for the first emulation card corresponding to the first identification information, that is, the first emulation card has the first identification information.

In some other embodiments, when the NFC controller 401 determines that the first identification information does not match the identification information stored in the routing information, that is, it indicates that the electronic device 101 does not have the first emulation card corresponding to the first identification information the electronic device 101 may generate third response information, and sends the third response information to the NFC card reader 102 through the NFC transceiver 401. The third response information includes information indicating a processing failure. In some other embodiments, when the NFC controller 401 determines that the first identification information does not match the identification information stored in the routing information, the electronic device 101 may alternatively not respond to the first query information.

Step S804: When determining that the first emulation card exists, the electronic device 101 sends first response information to the NFC card reader 102.

In some embodiments, the first response information may be carried on the APDU response command. For example, FIG. 10 is a schematic structural diagram of the APDU response command. The APDU response command may include a body, that is, a response data field (response data field) and a response trailer (response trailer). The response data field is an optional field, and may include data returned by the electronic device 101. The response trailer includes SW1 and SW2, and is used to indicate a status of command processing. For example, as shown in Table 3, SW1-SW2 is "9000" (hexadecimal), indicating that the processing succeeds. That is, the electronic device 101 supports the emulation card query service.

**Table 2**

| response data field | SW1 | SW2 |
|---|---|---|
| | 90 | 00 |

In some other embodiments, when the electronic device 101 determines that the first emulation card does not exist, the electronic device may use the APDU response command to indicate that processing cannot be performed. For example, SW1-SW2 in the APDU response command is "6900", indicating a processing failure.

Step S805: After receiving the first response information, the NFC card reader 102 sends second query information to the electronic device 101, where the second query information carries service type information of a supported emulation card.

For example, because a value of the response trailer SW1-SW2 in the first response information is 9000, the NFC card reader 102 may send the second query information. The second query information is used to further notify the electronic device 102 of the service type information of the emulation card supported by the NFC card reader 102, so that the electronic device 102 determines, from stored one or more emulation cards, an emulation card whose service type information is the same as the service type information.

The second query information carries the service te information of the emulation card supported bv the NFC card reader 102. For example, if the NFC card reader 102 is a card reader disposed on a bus, an emulation card type supported by the card reader is a bus card. For another example, if the NFC card reader 102 is a card reader disposed on a POS (point of sales, POS) terminal of a store, an emulation card type supported by the card reader is a bank card. The service type information may be carried in the APDU sending command. For example, the APDU sending command may be "00B0010200". For example:

**Table 3**

| CLA | INS | P1 | P2 | L_{c} | command data field | Lₑ |
|---|---|---|---|---|---|---|
| 00 | B0 | 01 | 02 | 00 | | |

In Table 3, values of the parameter P1 and the parameter P2 may be used to indicate the service type information of the emulation card supported by the NFC card reader 102. As shown in Table 2, a value of the parameter P1 is "01" indicating a bank card, and a value of the parameter P2 is "02" indicating a small consumption. That is, the NFC card reader 102 may notify, by using data carried in P1 or P2 in the second query information, the electronic device 101 that the NFC card reader 102 supports a small consumption bank card. In Table 3, Lc is a length of an AID expected to be returned, and 00 indicates that the length is not limited. In some embodiments, the second query information may not need to carry the first identification information (for example, the AID of the first emulation card), because the second query information is in a lifetime of the first query information. That is, after the electronic device 101 returns "9000" (the value of the response trailer SW1-SW2 in the first response information is 9000), processing of all information is routed to an application selected by the first identification information (for example, HCE application or NFC wallet). In other words, unless the second query information carries identification information of another emulation card, subsequent processing is performed in the lifetime of the first query information. Therefore, the command data field in the second query information may not be used to carry the first identification information.

Step S806: After receiving the second query information, the electronic device 101 determines, based on the service type information, whether a second emulation card corresponding to the service type information exists.

It may be understood that because the second query information does not carry any identification information, it indicates that the second query information is still in the lifetime of the first query information. Therefore, after the electronic device 101 receives the second query information, the NFC controller 401 does not need to determine, based on the routing information stored in the NFC memory 403, whether the identification information matches.

For example, after the NFC transceiver 401 receives the second query information, the NFC controller 401 forwards the second query information to the HCE module 405 corresponding to the first identification information. The HCE module 405 determines, based on the service type information in the second query information, whether the NFC memory 403 stores an emulation card of the service type information. For example, the HCE module 405 parses out that the value of P1 is 01, indicating that the service type information is a bank card. The HCE module 405 queries the NFC memory 403 for whether the bank card exists, and if the bank card exists, determines an AID of the bank card, so that the determined bank card AID is subsequently returned to the NFC card reader 102. In some other embodiments, if the HCE module 405 finds that the bank card does not exist in the NFC memory 403, the HCE module 405 returns processing failure information to the NFC card reader 102.

It may be understood that the emulation card stored in the NFC memory 403 includes an emulation card managed by the HCE module 405, and also includes an emulation card managed by the SE 404. That is, the emulation card queried by the HCE module 405 based on the service type information includes all emulation cards implemented according to different technical solutions, for example, an HCE solution and a virtual card solution.

In some other embodiments, if the HCE module 405 finds that there are two or more emulation cards that meet the foregoing service type information, the HCE module 405 uses an emulation card with a highest priority as the determined emulation card based on a configured priority. In this way, an error in the NFC transaction may be further reduced, thereby further improving NFC transaction efficiency of the electronic device 101.

Step S807: When determining that the second emulation card exists, the electronic device 101 sends second response information, where the second response information carries identification information of the second emulation card, that is, second identification information. For example, the second response information may be sent by using the APDU response command, and the second identification information is an AID of the second emulation card.

**Table 4**

| response data field | SW1 | SW2 |
|---|---|---|
| A000000333010102 | 90 | 00 |

In Table 4, a value of the response data field "A000000333010102" is the AID of the bank card determined in step S806, that is, the second identification information.

Step S808: After receiving the second response information, the NFC card reader 102 sends card selection instruction information.

The card selection instruction information carries the second identification information. For example, the card selection instruction information may be carried on the APDU sending command, as shown in Table 5. In Table 5, a value of the response data field "A000000333010102" is the second identification information.

**Table 5**

| CLA | INS | P1 | P2 | L_{c} | command data field | Lₑ |
|---|---|---|---|---|---|---|
| 00 | A4 | 04 | 00 | 08 | A000000333010102 | |

Step S809: The electronic device 101 sends card selection response information after receiving the card selection instruction information.

For example, as shown in Table 6, the value of the response trailer SW1-SW2 is 9000, indicating that the processing succeeds, and the emulation card selected by the NFC card reader 102 is available, that is, the NFC card reader 102 successfully selects a card.

**Table 6**

| response data field | SW1 | SW2 |
|---|---|---|
| | 90 | 00 |

Step S810: After receiving the card selection response information, the NFC card reader 102 delivers an instruction required for a current NFC service (such as authentication, file selection, reading, and writing) and processes the service based on related response information to complete a service processing procedure. It may be understood that step S810 may be a technical solution of NFC communication in the current technology, and details are not described herein.

According to the foregoing technical solution, when the electronic device 101, for example, a mobile phone, is close to an NFC card reader to perform an NFC payment, the mobile phone may automatically select an emulation card supported by the NFC card reader. This avoids a technical issue in the current technology that the NFC payment fails when a service type of a default emulation card is inconsistent with a service type of the emulation card supported by the NFC card reader. In addition, in the foregoing technical solution, cumbersome operations of displaying a user interface on the electronic device and then manually switching an emulation card by a user do not need to be performed, thereby improving NFC communication efficiency and improving user experience. In addition, in the foregoing embodiment, an interaction process between the electronic device and the NFC card reader may not require any operation of the user, and does not need to be presented to the user through the user interface. Therefore, an imperceptible payment can be implemented.

Certainly, in some other embodiments, after an NFC transaction payment succeeds, the electronic device 101 may generate a vibration prompt, make a sound, or display the user interface, so as to prompt the user with related payment information such as a consumption amount, a merchant name, and an emulation card. Therefore, in some other embodiments, the NFC-based data transmission method may further include the following steps:
Step S811: The electronic device 101 receives a payment response message sent by the verification server 106, where the payment response message may be a message indicating that the NFC payment succeeds, or may be a message indicating that the NFC payment fails.
Step S812: The electronic device 101 prompts the user in a proper prompt manner based on the payment response message.

There may be a plurality of prompt manners. For example, a message indicating that the NFC payment succeeds or fails is displayed on the display 194, the user may be prompted by an audio played by the speaker 170A, or the user may be prompted by vibration of the motor 191.

FIG. 1 is still used as an example for description. After the NFC card reader 102 receives payment-related payment data returned by the electronic device 101 (for example, a mobile phone), the NFC card reader 102 may perform preliminary processing on the obtained payment data. Then, an NFC transaction processing result is reported to the verification server 106 on a network side through the communications network 104. After receiving the processing result, the verification server 106 sends an NFC payment success or payment failure message (that is, the foregoing payment response message) to the electronic device 101 through the communications network 104. Then, after receiving the payment response message, the electronic device 101 presents prompt information, so that the user can know an NFC payment result. Alternatively, the electronic device 101 may send the prompt information to the electronic device 103 (for example, a smartwatch) through the communications network 104 (for example, Bluetooth), and after receiving the prompt message, the electronic device 103 displays the prompt information on a display of the electronic device 103. It may be understood that, in some other embodiments, the verification server 106 may also send the payment response message to the electronic device 103 through the communications network 104 without forwarding the payment response message to the electronic device 103 through the electronic device 101.

In some other embodiments, to ensure security of the NFC payment, after the NFC card reader 102 receives the payment-related payment data returned by the electronic device 101, the NFC card reader 102 may perform preliminary encryption processing on the payment data, and send the payment data to the verification server 106 through the communications network 104. The verification server 106 attempts to authenticate the payment data, and may deliver, after the authentication, an authentication result, for example, a message indicating that NFC payment authentication succeeds or fails, to the NFC card reader 102 through the communications network 104. The NFC card reader 102 can confirm that the NFC transaction succeeds only after receiving a message indicating that the authentication succeeds.

In some other embodiments, to further ensure security of the NFC transaction, the verification server may receive, through the communications network 104, a payment voucher that is related to the payment and that is sent by the NFC card reader 102, and also receive, through the communications network 104, a payment voucher that is related to a current NFC payment and that is sent by the electronic device 101. Then, the verification server 106 attempts to verify the foregoing two payment vouchers, and may deliver a verification success message to the NFC card reader 102 through the communications network 104 after the verification succeeds, and may also deliver the verification success message to the electronic device 101.

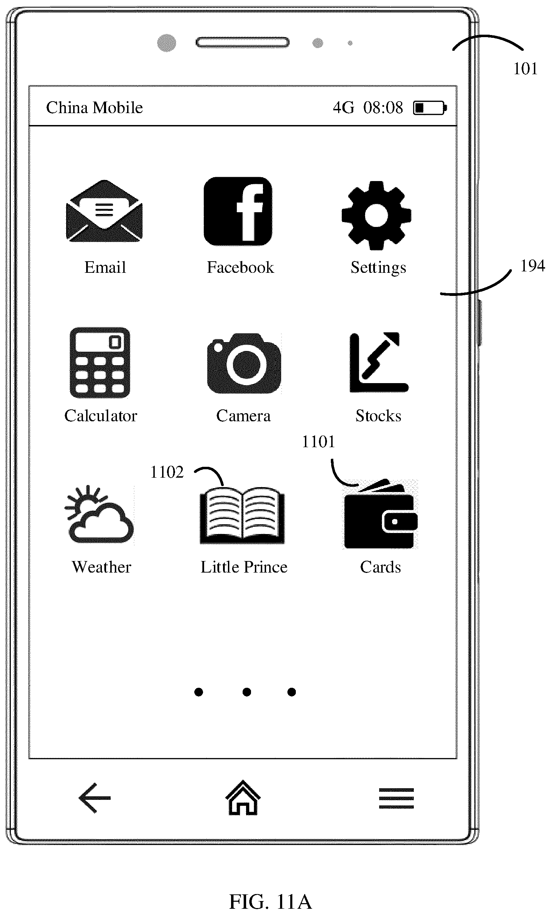

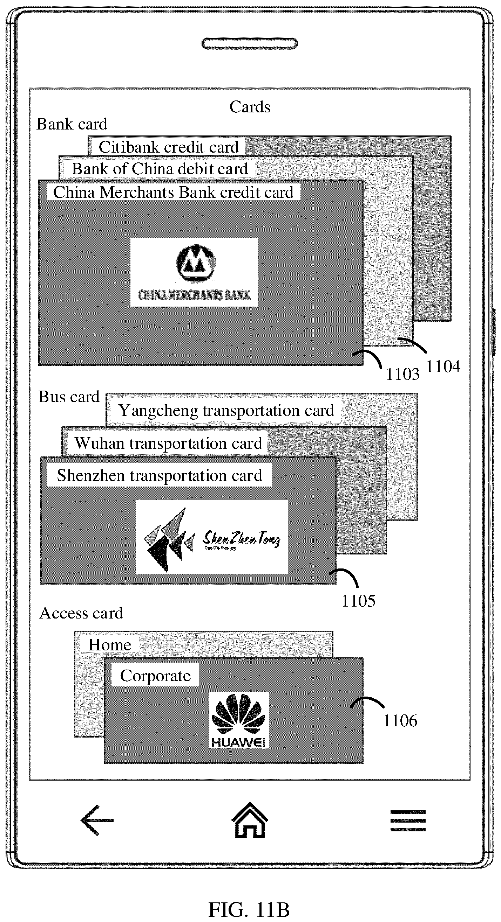

For example, FIG. 11A shows a graphical user interface (graphical user interface, GUI) displayed on a touchscreen of the electronic device 101 (for example, a mobile phone) in some embodiments. The GUI displays one page of three home screens (home screen), and the displayed page includes icons of various applications and other controls. For example, an icon 1101 indicates an application named "Cards", and an icon 1102 indicates an application named "Little Prince". When the electronic device 101 detects an operation performed by a finger of the user on the icon 1101, in response to the operation, the home screen of the application is displayed on the display 194. FIG. 11B is an example GUI displayed after the application "Cards" is opened. In this GUI, three emulation cards of service type information are displayed. A bank card type has a largest emulation card display size because it is used most frequently, and an access card type has a smallest emulation card display size because it is used least frequently.

It may be understood that the user may add or delete a bank card, an access card, a fitness card, or a bus card in the application, store a value on a bus card, modify financial information of a bank card, and the like. The foregoing operations performed by the user in the application "Cards" may be synchronized with the application server 105 through the communications network 104, so that the application server 105 manages the application.

Emulation cards classified as the bank card include a China Merchants Bank credit card 1103, a Bank of China debit card 1104, and a Citibank credit card. The China Merchants Bank credit card displayed on the top layer may be a bank card with a highest priority, the Bank of China debit card is the second, and the Citibank credit card has a lowest priority. In other words, if the electronic device 101 determines that the NFC transaction needs to be performed by using a bank card, the electronic device 101 may select the China Merchants Bank credit card as the determined emulation card based on a priority. It can also be considered that China Merchants Bank credit card is a default bank card. Emulation cards classified as the bus card include Yangcheng transportation card, Wuhan transportation card and Shenzhen transportation card 1105. The Shenzhen transportation card 1105 displayed on the top layer is a bus card with a highest priority, and may also be considered as a default bus card. Emulation cards classified as the access card include a home access card and a corporate access card 1106. The corporate access card 1106 displayed on the top layer is an access card with a highest priority, and may also be considered as a default access card. It may be understood that, in some other embodiments, the user may manually select another emulation card as a default emulation card by using the GUI. For example, the finger of the user performs a tap operation on the emulation card 1104 (namely, the Bank of China debit card), and in response to the tap operation, the electronic device 101 displays the emulation card 1104 on the top layer. The emulation card 1103 (namely, the China Merchants Bank credit card) originally displayed on the top layer is displayed on a next layer, while the Citibank credit card is still displayed on the bottom layer. That is, the electronic device 101 may update (that is, change) the default emulation card (that is, a card with a highest priority) based on manual selection by the user.

In some other embodiments, in emulation cards of a same service type, the default emulation card may not be an emulation card with a highest priority. For example, a default card automatically configured by the electronic device 101 in the bank card is the Bank of China debit card 1104, and the emulation card with the highest priority set by the user is the China Merchants Bank card 1103, as shown in FIG. 11B. When a received card selection instruction is selecting a bank card, the electronic device 101 may first use the default bank card, and if the NFC payment by using the default bank card fails, the electronic device 101 then selects the bank card with the highest priority that is set by the user. In this way, a technical problem that when the NFC payment fails, another emulation card cannot be selected is avoided, thereby improving usage efficiency of the NFC payment.

In some other embodiments, the electronic device 101 may further automatically update priorities of the emulation cards based on various obtained scene information (for example, a geographical location or time).

In some other embodiments, to further ensure security of the NFC payment, the foregoing step S806 may specifically include:
Step S8061: Present first prompt information on the electronic device 101, where the prompt information is used to prompt the user whether to use the default emulation card to perform the NFC transaction, for example, the NFC payment. The first prompt information may be presented in an auditory form, for example, a prompt tone, or may be presented in a visual form, for example, a notification bar.
Step S8062: Receive a confirmation operation of the user. For example, the confirmation operation may be an operation such as tapping, pressing and holding, or pressing a control.
Step S8063: In response to the confirmation operation, the electronic device 101 determines the second emulation card corresponding to the service type information.

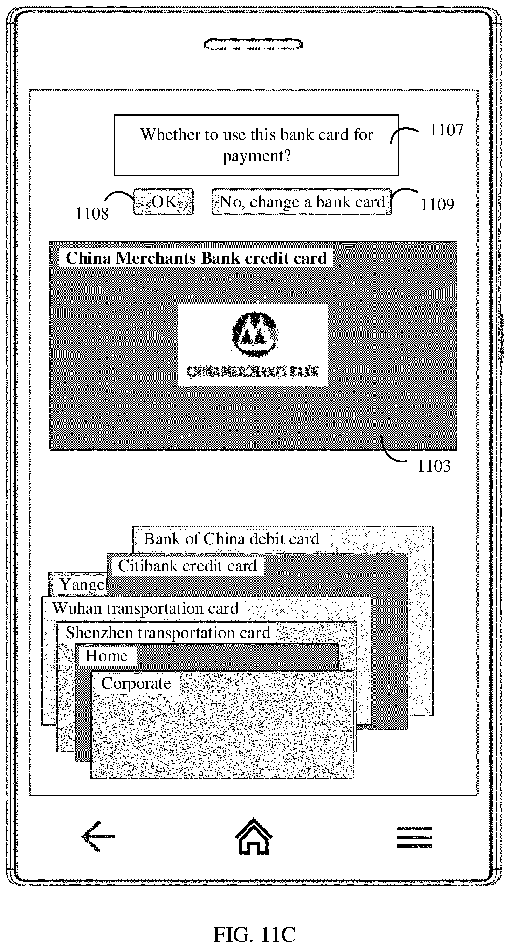

For example, as shown in FIG. 11C, when the electronic device 101 finds the service type information of the emulation card in the second query information in step S805, an enlarged emulation card 1103 is displayed on the display 194 of the electronic device 101. The emulation card 1103 is a default emulation card corresponding to the service type information, and other emulation cards are shrunk and stacked together, indicating that these emulation cards are not determined emulation cards. In addition, to ensure security of the NFC payment, a prompt dialog box 1107 may be further displayed on the display 194. The prompt dialog box 1107 is used to prompt the user whether to use the default emulation card 1103. At least two controls may be displayed below the prompt dialog box 1107. A control 1108 indicates that after receiving an operation (for example, tapping) of the user, the emulation card 1103 is determined as an emulation card of a current NFC transaction. A control 1109 indicates that after receiving an operation (for example, tapping) of the user, the electronic device 101 may determine, based on a selection of the user, another emulation card corresponding to the foregoing service type information. For example, after the electronic device 101 detects an operation (for example, tapping or pressing) performed by the user on the control 1109, in response to the operation, the electronic device 101 enables the display 194 to display a GUI. The GUI is configured to provide one or more emulation cards corresponding to the service type information, so that the user can make a selection. After the user selects another emulation card, the emulation card is the emulation card of the current NFC transaction, that is, the emulation card automatically determined by the electronic device 101 may be manually changed by the user. In this way, more convenient card selection is provided, and user experience is further improved.

In some other embodiments, to further ensure security of the NFC payment, the foregoing step S806 may specifically include:
Step S8064: The electronic device 101 collects biometric feature information of the user. For example, the electronic device 101 may collect, by using the one or more sensors 180, various types of biometric feature information, for example, a voiceprint, a fingerprint, a face, or an iris.
Step S8065: The electronic device 101 attempts to verify the biometric feature information. For example, the electronic device 101 may match the collected biometric feature information with stored user biometric feature information.
Step S8066: After the electronic device 101 successfully verifies the collected biometric feature information, the electronic device 101 determines the second emulation card corresponding to the foregoing service type information.

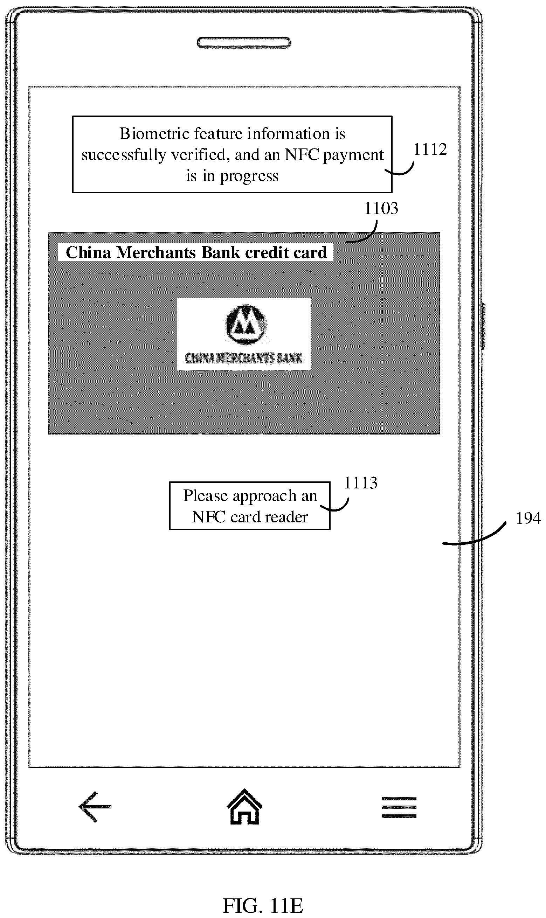

For example, the electronic device 101 may present second prompt information. As shown in FIG. 11E, the second prompt information may include a prompt dialog box 1112 and a prompt dialog box 1113. The prompt dialog box 1112 indicates that the biometric feature information is successfully verified, and the NFC payment is performed by using the determined second emulation card. The prompt dialog box 1113 indicates the user to approach the NFC card reader 102, so that the NFC card reader 102 senses NFC radio frequency field strength.

In some other embodiments, before step S801, the electronic device 101 may collect the biometric feature information of the user, and the electronic device 101 enables an NFC function only after verification succeeds. In this way, data privacy of the user is protected. This prevents anyone from randomly performing the NFC payment after obtaining the electronic device 101.

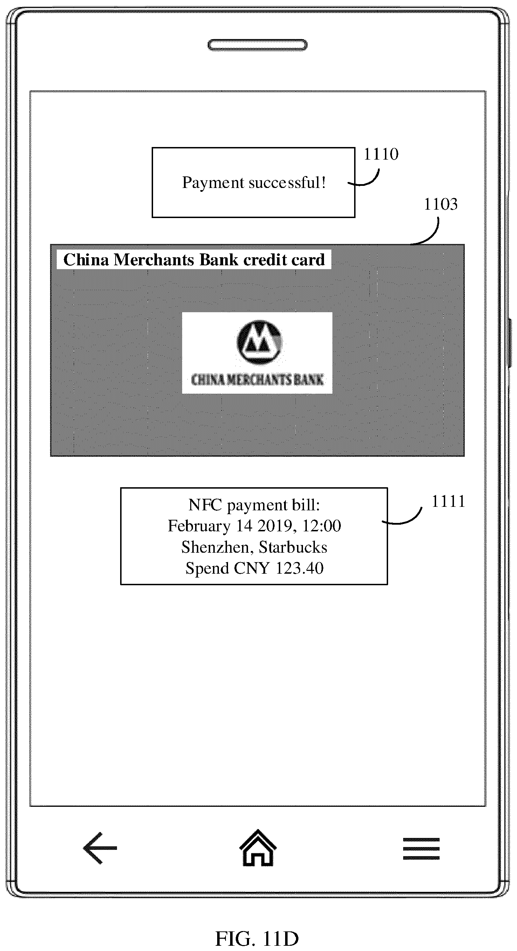

In some other embodiments, to let the user know a result of the NFC payment, after step S810, the foregoing method may further include:
Step S813: After the NFC payment succeeds, the electronic device 101 displays third prompt information on the display 194, where the third prompt information is used to prompt the user that the NFC payment succeeds. For example, as shown in FIG. 11D, the third prompt information may include a prompt dialog box 1110 and NFC transaction information 1111. The NFC transaction information 1111 may include a time, a place, a store name, an amount, and the like of the current NFC transaction, so as to facilitate viewing by the user. In some other embodiments, after an operation (for example, tapping, or touching and holding) performed by the user on the NFC transaction information 1111 is detected, in response to the operation, detailed information about the current NFC transaction may be displayed on the display 194. This further facilitates viewing by the user, and improves user experience.

In some other embodiments, as shown in FIG. 8, the method may further include the following steps.

In some other embodiments, when the user performs the NFC payment in a screen-locked situation, biometric feature information (for example, voiceprint, face, fingerprint, or iris) verification may be combined to further enhance security of the NFC payment. For example, in the foregoing embodiment, after the electronic device 101 determines the second emulation card, before sending the second response information, the electronic device 101 may prompt the user that the biometric feature information verification needs to be performed before performing the NFC payment. After the biometric feature information of the user is collected and the verification succeeds, the second response information carrying the second identification information is sent to the NFC card reader 102. In this way, security of the NFC payment is further ensured.

In some other embodiments, the first query information is used to determine whether the electronic device 102 supports the emulation card query service, and the first identification information is also an AID of the intermediary card (namely, the first emulation card). Therefore, only when determining that the electronic device 101 supports the query service, the NFC card reader 102 sends the second query information to the electronic device 101. In this way, a technical problem that the NFC transaction may fail because the NFC card reader 102 directly sends a card selection instruction can be avoided. Certainly, in some other embodiments, after detecting the NFC radio frequency field of the electronic device 101, in response to the radio frequency field, the NFC card reader 102 may send a card selection instruction to the electronic device 101.

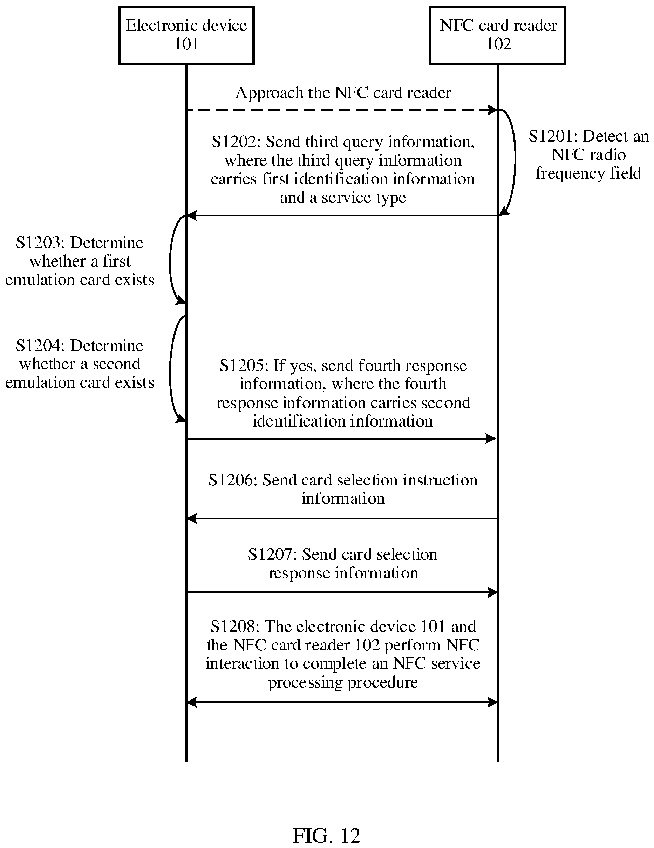

In some other embodiments, the NFC card reader 102 may also carry, in the first query information, the first identification information and the service type information of the emulation card supported by the NFC card reader 102. In this way, an information exchange process between the NFC card reader 102 and the electronic device 101 is reduced, thereby improving NFC payment efficiency. For example, as shown in FIG. 12, this embodiment provides an NFC-based data transmission method. The method may be implemented in the foregoing communications system 100, and the method may include the following steps.

S1201: The NFC card reader 102 detects an NFC radio frequency field of the electronic device 101.

S1202: In response to the detected NFC radio frequency field, the NFC card reader 102 sends third query information, where the third query information includes identification information of a first emulation card, that is, a first identification information, and also carries service type information of an emulation card supported by the NFC card reader.

For example, the third query information may be sent by the NFC transceiver 702 in the NFC card reader 102 to the NFC transceiver 402 of the electronic device 101 through an NFC link. The third query information carries an AID of the first emulation card and the supported service type information. In some embodiments, the first query information may be an APDU sending command. For example, the APDU sending command may be "00A4040007D2760000850100", and may be shown in Table 7.

**Table 7**

| CLA | INS | P1 | P2 | L_{c} | command data field | Lₑ |
|---|---|---|---|---|---|---|
| 00 | A4 | 01 | 02 | 07 | D2760000850100 | |

"D2760000850100" in the command data field is the first identification information of the first emulation card, and values of the parameter P1 and the parameter P2 indicate the service type information of the emulation card supported by the NFC card reader 102. As shown in Table 7, a value of the parameter P1 is "01" indicating a bank card, and a value of the parameter P2 is "02" indicating a small consumption. That is, the NFC card reader 102 may notify, by using data carried in P1 or P2 in the second query information, the electronic device 101 that the NFC card reader 102 supports a small consumption bank card.

Step S1203: After receiving the third query information, the electronic device 101 determines whether a corresponding first emulation card exists.

The electronic device 101 determines, based on the first identification information, whether the corresponding first emulation card exists. For a specific technical solution refer to FIG. 8 and the corresponding embodiment. Details are not described herein again.

Step S1204: When determining that the first emulation card exists, the electronic device 101 determines whether a second emulation card corresponding to the service type information exists.

The electronic device 101 determines, based on the service type information in the third query information, whether the corresponding second emulation card exists. For a specific technical solution, refer to FIG. 8 and the corresponding embodiment. Details are not described herein again.

Step S 1205: When determining that the second emulation card exists, the electronic device 101 sends fourth response information, where the fourth response information carries identification information of the second emulation card, that is, second identification information. For a specific technical solution, refer to FIG. 8 and the corresponding embodiment. Details are not described herein again.

Step S1206: After receiving the fourth response information, the NFC card reader 102 sends card selection instruction information. For a specific technical solution, refer to FIG. 8 and the corresponding embodiment. Details are not described herein again.

Step S1207: The electronic device 101 sends card selection response information after receiving the card selection instruction information. For a specific technical solution, refer to FIG. 8 and the corresponding embodiment. Details are not described herein again.

Step S1208: After receiving the card selection response information, the NFC card reader 102 delivers an instruction required for a current NFC service (such as authentication, file selection, reading, and writing) and processes the service based on related response information to complete a service processing procedure. It may be understood that step S1208 may be a technical solution of NFC communication in the current technology, and details are not described herein again.

According to the context, the term "when" used in the foregoing embodiments may be interpreted as a meaning of "if" or "after" or "in response to determining" or "in response to detecting". Similarly, according to the context, the phrase "when it is determined that" or "if (a stated condition or event) is detected" may be interpreted as a meaning of "if determining" or "in response to determining" or "when (a stated condition or event) is detected" or "in response to detecting (a stated condition or event)".

Although terms "first", "second", and the like may be used herein to describe various emulation cards, prompt information, and the like, these emulation cards and prompt information should not be limited by these terms. These terms are used only to distinguish one emulation card from another emulation card, or to distinguish one piece of prompt information from another piece of prompt information. For example, the first emulation card may be named the second emulation card, and similarly, the second emulation card may also be named the first emulation card

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive Solid State Disk (SSD)), or the like.

## Claims

1. A communications system, comprising an NFC card reader (102) and an electronic device (101) having an NFC function,
wherein
the NFC card reader is configured to:
send third query information after detecting an NFC radio frequency field of the electronic device, wherein the third query information carries first identification information and service type information of an emulation card supported by the NFC card reader; **characterized in that**
the electronic device is configured to:
after receiving the third query information, determine whether a first emulation card corresponding to the first identification information exists;
when determining that the first emulation card exists, determine whether a second emulation card corresponding to the service type information exists; and
send fourth response information when determining that the second emulation card exists, wherein the fourth response information carries second identification information of the second emulation card, wherein
the NFC card reader is further configured to: send card selection instruction information after receiving the fourth response information, wherein the card selection instruction information carries the second identification information; and
the electronic device is further configured to send card selection response information after receiving the card selection instruction information.

2. The communications system according to claim 1, wherein the first identification information is an application identifier AID, the third query information is carried on an application protocol data unit APDU sending command, and the fourth response information is carried on an APDU response command.

3. The communications system according to claim 2, wherein the service type information is carried on an instruction parameter P1 in the APDU sending command.

4. The communications system according to claim 3, wherein service type information of the first emulation card is different from service type information of the second emulation card.

5. The communications system according to claim 3, wherein the electronic device is further configured to present prompt information, wherein the prompt information is used to prompt a user that an NFC transaction succeeds or fails.

6. An NFC-based data transmission method, wherein the method is applied to an NFC card reader and an electronic device having an NFC function, and the method comprises:
detecting, by the NFC card reader, an NFC radio frequency field of the electronic device;
sending, by the NFC card reader, third query information in response to the foregoing detection, wherein the third query information comprises first identification information and service type information of an emulation card supported by the NFC card reader;
after receiving the third query information, determining, by the electronic device, whether a first emulation card corresponding to the first identification information exists;
when determining that the first emulation card exists, determining, by the electronic device, whether a second emulation card corresponding to the service type information exists;
sending, by the electronic device, fourth response information when determining that the second emulation card exists, wherein the fourth response information carries second identification information of the second emulation card;
sending, by the NFC card reader, card selection instruction information after receiving the fourth response information, wherein the card selection instruction information carries the second identification information; and
sending, by the electronic device, card selection response information after receiving the card selection instruction information.

7. The NFC-based data transmission method according to claim 6, wherein the first identification information is an application identifier AID, the third query information is carried on an application protocol data unit APDU sending command, and the fourth response information is carried on an APDU response command.

8. The NFC-based data transmission method according to claim 7, wherein the service type information is carried on an instruction parameter P1 in the APDU sending command.

9. The NFC-based data transmission method according to claim 6, wherein service type information of the first emulation card is different from service type information of the second emulation card.

10. The NFC-based data transmission method according to claim 6, wherein the sending, by the electronic device, fourth response information when determining that the second emulation card exists specifically comprises:
collecting, by the electronic device, biometric feature information of a user;
attempting, by the electronic device, to verify the collected biometric feature information; and
sending, by the electronic device, the fourth response information when the verification succeeds.

11. An electronic device (101), comprising one or more touchscreens, one or more processors, and one or more memories, wherein the one or more memories store one or more computer programs, the one or more computer programs comprise instructions, and when the instructions are executed by the one or more processors, the electronic receive third query information, wherein the third query information comprises first identification information and service type information of an emulation card supported by an NFC card reader (102);
determine whether a first emulation card corresponding to the first identification information exists;
when determining that the first emulation card exists, determine whether a second emulation card corresponding to the service type information exists;
send fourth response information when determining that the second emulation card exists, wherein the fourth response information carries second identification information of the second emulation card;
receive card selection instruction information sent by the NFC card reader, wherein the card selection instruction information carries the second identification information; and
send card selection response information.

## Patentansprüche

1. Kommunikationssystem, umfassend einen NFC-Kartenleser (102) und eine elektronische Vorrichtung (101), die eine NFC-Funktion aufweist,
wobei
der NFC-Kartenleser für Folgendes konfiguriert ist:
Senden dritter Abfrageinformationen, nachdem ein NFC-Hochfrequenzfeld der elektronischen Vorrichtung detektiert wurde, wobei die dritten Abfrageinformationen erste Identifikationsinformationen und Diensttypinformationen einer Emulationskarte enthalten, die durch das NFC-Kartenleser unterstützt wird; **dadurch gekennzeichnet, dass**
die elektronische Vorrichtung für Folgendes konfiguriert ist:
nach Empfangen der dritten Abfrageinformationen, Bestimmen, ob eine erste Emulationskarte, die den ersten Identifikationsinformationen entspricht, existiert;
wenn bestimmt wird, dass die erste Emulationskarte existiert, Bestimmen, ob eine zweite Emulationskarte, die den Diensttypinformationen entspricht, existiert; und
Senden vierter Antwortinformationen, wenn bestimmt wird, dass die zweite Emulationskarte existiert, wobei die vierten Antwortinformationen zweite Identifikationsinformationen der zweiten Emulationskarte enthalten, wobei
der NFC-Kartenleser ferner für Folgendes konfiguriert ist: Senden von Kartenauswahlanweisungsinformationen nach Empfangen der vierten Antwortinformationen, wobei die Kartenauswahlanweisungsinformationen die zweiten Identifikationsinformationen enthalten; und
die elektronische Vorrichtung ferner dazu konfiguriert ist, Kartenauswahlantwortinformationen zu senden, nachdem sie die Kartenauswahlanweisungsinformationen empfangen hat.

2. Kommunikationssystem nach Anspruch 1, wobei es sich bei den ersten Identifikationsinformationen um eine Anwendungskennung (application identifier - AID) handelt, die dritten Abfrageinformationen in einem Sendebefehl einer Anwendungsprotokolldateneinheit (application protocol data unit - APDU) enthalten sind und die vierten Antwortinformationen in einem APDU-Antwortbefehl enthalten sind.

3. Kommunikationssystem nach Anspruch 2, wobei die Diensttypinformationen in einem Anweisungsparameter P1 in dem APDU-Sendebefehl enthalten sind.

4. Kommunikationssystem nach Anspruch 3, wobei sich Diensttypinformationen der ersten Emulationskarte von Diensttypinformationen der zweiten Emulationskarte unterscheiden.

5. Kommunikationssystem nach Anspruch 3, wobei die elektronische Vorrichtung ferner dazu konfiguriert ist, Benachrichtigungsinformationen darzubieten, wobei die Benachrichtigungsinformationen verwendet werden, um einen Benutzer darüber zu benachrichtigen, dass eine NFC-Transaktion erfolgreich ist oder fehlschlägt.

6. NFC-basiertes Datenübertragungsverfahren, wobei das Verfahren auf einen NFC-Kartenleser und eine elektronische Vorrichtung, die eine NFC-Funktion aufweist, angewendet wird und das Verfahren Folgendes umfasst:
Detektieren eines NFC-Hochfrequenzfelds der elektronischen Vorrichtung durch den NFC-Kartenleser;
Senden dritter Abfrageinformationen durch den NFC-Kartenleser als Reaktion auf die vorhergehende Detektion, wobei die dritten Abfrageinformationen erste Identifikationsinformationen und
Diensttypinformationen einer Emulationskarte umfassen, die durch den NFC-Kartenleser unterstützt wird;
nach Empfangen der dritten Abfrageinformationen, Bestimmen durch die elektronische Vorrichtung, ob eine erste Emulationskarte, die den ersten Identifikationsinformationen entspricht, existiert;
wenn bestimmt wird, dass die erste Emulationskarte existiert, Bestimmen durch die elektronische Vorrichtung, ob eine zweite Emulationskarte, die den Diensttypinformationen entspricht, existiert;
Senden vierter Antwortinformationen durch die elektronische Vorrichtung, wenn bestimmt wird, dass die zweite Emulationskarte existiert, wobei die vierten Antwortinformationen zweite Identifikationsinformationen der zweiten Emulationskarte enthalten;
Senden von Kartenauswahlanweisungsinformationen durch den NFC-Kartenleser nach Empfangen der vierten Antwortinformationen, wobei die Kartenauswahlanweisungsinformationen die zweiten Identifikationsinformationen enthalten; und
Senden von Kartenauswahlantwortinformationen durch die elektronische Vorrichtung nach Empfangen der Kartenauswahlanweisungsinformationen.

7. NFC-basiertes Datenübertragungsverfahren nach Anspruch 6, wobei es sich bei den ersten Identifikationsinformationen um eine Anwendungskennung (AID) handelt, die dritten Abfrageinformationen in einem Sendebefehl einer Anwendungsprotokolldateneinheit (APDU) enthalten sind und die vierten Antwortinformationen in einem APDU-Antwortbefehl enthalten sind.

8. NFC-basiertes Datenübertragungsverfahren nach Anspruch 7, wobei die Diensttypinformationen in einem Anweisungsparameter P1 in dem APDU-Sendebefehl enthalten sind.

9. NFC-basiertes Datenübertragungsverfahren nach Anspruch 6, wobei sich Diensttypinformationen der ersten Emulationskarte von Diensttypinformationen der zweiten Emulationskarte unterscheiden.

10. NFC-basiertes Datenübertragungsverfahren nach Anspruch 6, wobei das Senden vierter Antwortinformationen durch die elektronische Vorrichtung, wenn bestimmt wird, dass die zweite Emulationskarte existiert, insbesondere Folgendes umfasst:
Sammeln von Informationen zu biometrischen Merkmalen eines Benutzers durch die elektronische Vorrichtung;
Versuchen durch die elektronische Vorrichtung, die gesammelten Informationen zu biometrischen Merkmalen zu verifizieren; und
Senden der vierten Antwortinformationen durch die elektronische Vorrichtung, wenn die Verifizierung erfolgreich ist.

11. Elektronische Vorrichtung (101), umfassend einen oder mehrere Touchscreens, einen oder mehrere Prozessoren und einen oder mehrere Speicher, wobei der eine oder die mehreren Speicher ein oder mehrere Computerprogramme speichern, das eine oder die mehreren Computerprogramme Anweisungen umfassen und die elektronische Vorrichtung, wenn die Anweisungen durch den einen oder die mehreren Prozessoren ausgeführt werden, aktiviert wird, um die folgenden Schritte durchzuführen:
Empfangen dritter Abfrageinformationen, wobei die dritten Abfrageinformationen erste Identifikationsinformationen und Diensttypinformationen einer Emulationskarte, die durch einen NFC-Kartenleser (102) unterstützt wird, umfassen;
Bestimmen, ob eine erste Emulationskarte, die den ersten Identifikationsinformationen entspricht, existiert;
wenn bestimmt wird, dass die erste Emulationskarte existiert, Bestimmen, ob eine zweite Emulationskarte, die den Diensttypinformationen entspricht, existiert;
Senden vierter Antwortinformationen, wenn bestimmt wird, dass die zweite Emulationskarte existiert, wobei die vierten Antwortinformationen zweite Identifikationsinformationen der zweiten Emulationskarte enthalten;
Empfangen von durch den NFC-Kartenleser gesendeten Kartenauswahlanweisungsinformationen, wobei die Kartenauswahlanweisungsinformationen die zweiten Identifikationsinformationen enthalten; und
Senden von Kartenauswahlantwortinformationen.

## Revendications

1. Système de communication, comprenant un lecteur de carte NFC (102) et un dispositif électronique (101) ayant une fonction NFC,
dans lequel
le lecteur de carte NFC est configuré pour :
envoyer des troisièmes informations de requête après détection d'un champ de radiofréquence NFC du dispositif électronique, dans lequel les troisièmes informations de requête transportent des premières informations d'identification et des informations de type de service d'une carte d'émulation prise en charge par le lecteur de carte NFC ; **caractérisé en ce que**
le dispositif électronique est configuré pour :
après réception des troisièmes informations de requête, déterminer si une première carte d'émulation correspondant aux premières informations d'identification existe ;
lors de la détermination que la première carte d'émulation existe, déterminer si une seconde carte d'émulation correspondant aux informations de type de service existe ; et envoyer des quatrièmes informations de réponse lorsqu'il est déterminé que la seconde carte d'émulation existe, dans lequel les quatrièmes informations de réponse transportent des secondes informations d'identification de la seconde carte d'émulation,
dans lequel
le lecteur de carte NFC est en outre configuré pour : envoyer des informations d'instruction de sélection de carte après réception des quatrièmes informations de réponse, dans lequel les informations d'instruction de sélection de carte transportent les secondes informations d'identification ; et le dispositif électronique est en outre configuré pour envoyer des informations de réponse de sélection de carte après réception des informations d'instruction de sélection de carte.

2. Système de communication selon la revendication 1, dans lequel les premières informations d'identification sont un identifiant d'application AID, les troisièmes informations de requête sont transportées sur une commande d'envoi d'unité de données de protocole d'application APDU, et les quatrièmes informations de réponse sont transportées sur une commande de réponse APDU.

3. Système de communication selon la revendication 2, dans lequel les informations de type de service sont transportées sur un paramètre d'instruction P1 dans la commande d'envoi APDU.

4. Système de communication selon la revendication 3, dans lequel les informations de type de service de la première carte d'émulation sont différentes des informations de type de service de la seconde carte d'émulation.

5. Système de communication selon la revendication 3, dans lequel le dispositif électronique est en outre configuré pour présenter des informations d'invite, dans lequel les informations d'invite sont utilisées pour indiquer à un utilisateur qu'une transaction NFC réussit ou échoue.

6. Procédé de transmission de données basé sur NFC, dans lequel le procédé est appliqué à un lecteur de carte NFC et à un dispositif électronique ayant une fonction NFC, et le procédé comprend :
la détection, par le lecteur de carte NFC, d'un champ radiofréquence NFC du dispositif électronique ;
l'envoi, par le lecteur de carte NFC, de troisièmes informations de requête en réponse à la détection précédente, dans lequel les troisièmes informations de requête comprennent des premières informations d'identification et des informations de type de service d'une carte d'émulation prise en charge par le lecteur de carte NFC ;
après réception des troisièmes informations de requête, le fait de déterminer, par le dispositif électronique, si une première carte d'émulation correspondant aux premières informations d'identification existe ;
lors de la détermination que la première carte d'émulation existe, le fait de déterminer, par le dispositif électronique, si une seconde carte d'émulation correspondant aux informations de type de service existe ;
l'envoi, par le dispositif électronique, de quatrièmes informations de réponse lorsqu'il est déterminé que la seconde carte d'émulation existe, dans lequel les quatrièmes informations de réponse transportent des secondes informations d'identification de la seconde carte d'émulation ;
l'envoi, par le lecteur de carte NFC, d'informations d'instruction de sélection de carte après réception des quatrièmes informations de réponse, dans lequel les informations d'instruction de sélection de carte transportent les secondes informations d'identification ; et
l'envoi, par le dispositif électronique, d'informations de réponse de sélection de carte après réception des informations d'instruction de sélection de carte.

7. Procédé de transmission de données basé sur NFC selon la revendication 6, dans lequel les premières informations d'identification sont un identifiant d'application AID, les troisièmes informations de requête sont transportées sur une commande d'envoi d'unité de données de protocole d'application APDU, et les quatrièmes informations de réponse sont transportées sur une commande de réponse APDU.

8. Procédé de transmission de données basé sur NFC selon la revendication 7, dans lequel les informations de type de service sont transportées sur un paramètre d'instruction P1 dans la commande d'envoi APDU.

9. Procédé de transmission de données basé sur NFC selon la revendication 6, dans lequel les informations de type de service de la première carte d'émulation sont différentes des informations de type de service de la seconde carte d'émulation.

10. Procédé de transmission de données basé sur NFC selon la revendication 6, dans lequel l'envoi, par le dispositif électronique, de quatrièmes informations de réponse lors de la détermination que la seconde carte d'émulation existe comprend spécifiquement :
la collecte, par le dispositif électronique, d'informations de caractéristiques biométriques d'un utilisateur ;
le fait de tenter, par le dispositif électronique, de vérifier les informations de caractéristiques biométriques collectées ; et
l'envoi, par le dispositif électronique, des quatrièmes informations de réponse lorsque la vérification réussit.

11. Dispositif électronique (101), comprenant un ou plusieurs écrans tactiles, un ou plusieurs processeurs et une ou plusieurs mémoires, dans lequel les une ou plusieurs mémoires stockent un ou plusieurs programmes informatiques, les un ou plusieurs programmes informatiques comprennent des instructions, et lorsque les instructions sont exécutées par les un ou plusieurs processeurs, le dispositif électronique est activé pour exécuter les étapes suivantes :
recevoir des troisièmes informations de requête, dans lequel les troisièmes informations de requête comprennent des premières informations d'identification et des informations de type de service d'une carte d'émulation prise en charge par un lecteur de carte NFC (102) ;
déterminer si une première carte d'émulation correspondant aux premières informations d'identification existe ;
lors de la détermination que la première carte d'émulation existe, déterminer si une seconde carte d'émulation correspondant aux informations de type de service existe ;
envoyer des quatrièmes informations de réponse lorsqu'il est déterminé que la seconde carte d'émulation existe, dans lequel les quatrièmes informations de réponse transportent des secondes informations d'identification de la seconde carte d'émulation ;
recevoir des informations d'instruction de sélection de carte envoyées par le lecteur de carte NFC, dans lequel les informations d'instruction de sélection de carte transportent les secondes informations d'identification ; et
envoyer des informations de réponse de sélection de carte.
